(19) Europäisches Patentamt / European Patent Office / Office européen des brevets

(11) **EP 4 300 141 B1**

(12) **EUROPEAN PATENT SPECIFICATION**

(45) Date of publication and mention
of the grant of the patent:
**27.05.2026 Bulletin 2026/22**

(21) Application number: **22759323.3**

(22) Date of filing: **03.02.2022**

(51) International Patent Classification (IPC):
**G02B 1/14** *(2015.01)*      **B41J 2/16** *(2006.01)*
**B82Y 40/00** *(2011.01)*      **C03C 17/245** *(2006.01)*
**C03C 17/42** *(2006.01)*      **G02B 1/18** *(2015.01)*
**B82Y 20/00** *(2011.01)*

(52) Cooperative Patent Classification (CPC):
**G02B 1/18; B41J 2/1606; C03C 17/245;**
**C03C 17/42; G02B 1/14;** B82Y 20/00; B82Y 40/00;
C03C 2217/71; C03C 2217/734; C03C 2217/76;
C03C 2217/77; C03C 2217/78; C03C 2218/32;
C03C 2218/33; C03C 2218/34

(86) International application number:
**PCT/JP2022/004245**

(87) International publication number:
**WO 2022/181283 (01.09.2022 Gazette 2022/35)**

(54) **FUNCTIONAL FILM, MANUFACTURING METHOD FOR FUNCITONAL FILM, OPTICAL DEVICE, INK JET HEAD, AND MOLD**

FUNKTIONSFILM, HERSTELLUNGSVERFAHREN FÜR FUNKTIONSFILM, OPTISCHE VORRICHTUNG, TINTENSTRAHLKOPF UND FORM

FILM FONCTIONNEL, PROCÉDÉ DE FABRICATION DE FILM FONCTIONNEL, DISPOSITIF OPTIQUE, TÊTE À JET D'ENCRE ET MOULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2021 JP 2021028160**

(43) Date of publication of application:
**03.01.2024 Bulletin 2024/01**

(73) Proprietor: **KONICA MINOLTA, INC.**
**Tokyo 100-7015 (JP)**

(72) Inventor: **TADA, Kazunari**
**Tokyo 100-7015 (JP)**

(74) Representative: **Hoffmann Eitle**
**Patent- und Rechtsanwälte PartmbB**
**Arabellastraße 30**
**81925 München (DE)**

(56) References cited:
WO-A1-2006/118348        JP-A- 2005 089 771
JP-A- 2015 147 343        JP-A- 2016 071 237
JP-A- 2018 522 809        JP-A- 2020 038 311
JP-A- 2020 038 311        JP-A- H08 334 939
US-A1- 2010 038 342       US-A1- 2011 028 305

• ANON.: "Mohs scale - Wikipedia", 10 April 2024 (2024-04-10), XP093156781, Retrieved from the Internet <URL:https://en.wikipedia.org/wiki/Mohs_scale>

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 4 300 141 B1

**Description**

Technical Field

The present invention relates to a functional film, and a method for manufacturing a functional film, and to an optical device, an inkjet head, and a mold each including the functional film. The present invention particularly relates to a functional film that can have both abrasion resistance and super water repellency and can be mass-produced.

Background Art

There has been no super water-repellent film having excellent abrasion resistance. When the initial contact angle is about 110 degrees, the deterioration of the contact angle is 10 degrees or less even when rubbed. However, for example, as disclosed in Japanese Patent No. 5716679 (Patent Literature 1), a super water-repellent film having a contact angle of more than 130 degrees usually suffers from a deterioration of the contact angle of 10 degrees or more in a rubbing test.

The reason for this is as follows. (i) Since the super water-repellent film has an uneven structure, the brittleness of the structure causes the deterioration of the contact angle. (ii) In order to form a super water-repellent film, it is necessary to carefully control the pitch, depth, and size of the uneven structure. In addition, since the necessary conditions for improvement regarding (i) and (ii) cannot be satisfied at the same time, the technic disclosed in Patent Literature 1 cannot achieve a durable super water-repellent film.

In particular, in an optical use or a mold use, it is necessary to accurately form the uneven structure that has an invisible size, an unbreakable shape, and a water-repellent property, and it is more difficult to form such film.

In addition, from the viewpoint of mass productivity and cost, lithography or nanoimprint, which requires treatment one by one, is not suitable.

Each of JP 2020 038311 A, US 2010/038342 A1, US 2011/028305 A1 and JP 2005 089771 A forms part of the state of the art.

Summary of Invention

Technical Problem

The present invention has been made in view of the above problems and circumstances. It is an object of the present invention to provide a functional film that can achieve both abrasion resistance and super water repellency and that can be mass-produced, and a method for producing the functional film. Another object of the present invention is to provide an optical device, an inkjet head, and a mold, each having the functional film.

Solution to Problem

The inventors of the present invention have found the followings in the process of studying the causes and the like of the problems in order to solve the problems. That is, the fine uneven structure on the surface of a functional film is configured such that: the structure has multi-stage projections, the relationship between the Mohs hardness of the inorganic substance contained as the main component and the number of stages of the projections satisfies a specific condition, and the average height from the lowermost bottom of the lowest-stage projections to the outermost surface of the highest-stage projections is within a specific range. It has been found that these allow provision of a functional film that can achieve both of abrasion resistance and super water repellency, a method for producing the fictional film and the like and the present invention has been thus comnleted

That is, the aforementioned problem relating to the present invention is solved by the features of the appended set of claims.

Advantageous Effects Invention

According to the present invention, it is possible to provide a functional film that can achieve both abrasion resistance and super water repellency and that can be mass-produced, and a method for producing the functional film. Further, according to the present invention, it is possible to provide an optical device, an inkjet head, and a mold each having the functional film.

An expression mechanism or an action mechanism of the advantageous effects of the present invention has not been fully revealed, but is assumed as follows.

As described above, it has been found that the following conditions must be satisfied in order to achieve both abrasion resistance and super water repellency and to ensure mass productivity.

(a) In order to prevent light diffraction, the uneven structure needs to be a random projections and recesses having a size of micrometers or less.

(b) In order to prevent deterioration in the rubbing test, it is necessary to eliminate breakage of the structure.

(c) In order to achieve super water repellency, it is necessary to control the size, pitch, and depth and the uneven structure.

(d) In order to increase the abrasion resistance, it is desirable that the film is made of an inorganic substance and is formed by a method other than coating.

(e) Lithography such as exposure or a stamper is not involved in the process.

Next, in order to satisfy the above-described conditions, the relationship between the number (Y) of stages of the projections of the fine uneven structure on the surface of the functional film and the Mohs hardness (X) of the inorganic substance contained as the main component satisfies the above-described specific condition, and the average height from the lowermost bottom of the lowest-stage projections to the outermost surface of the highest-stage projections is within the above-described specific range. It is assumed that this configuration allows controlling the aspect ratio of the uneven structure, achieving both super water repellency and abrasion resistance, and ensuring the mass productivity.

That is, in the present invention, the fine uneven structure allows the good water repellency. In particular, the multi-stage projections allows decreasing the aspect ratio of each stage, and thereby preventing the structure from breakage due to the deterioration in the rubbing test.

As described above, the present invention can achieve both scratch resistance and super water repellency. In addition, by forming the uneven fine structure of the functional film through the steps of forming a metal mask on an inorganic layer and processing the inorganic layer by dry etching, the rubbing resistance can be increased, and further, mass production becomes possible.

Brief Description of Drawings

[FIG. 1] This is a schematic cross-sectional view showing an example of the basic configuration of the functional film according to a comparative example.

[FIG. 2] This is a schematic cross-sectional view showing an example of the basic configuration of the functional film according to the present invention.

[FIG. 3] This is a view for explaining a method of calculating the average diameter of the highest-stage projections, which is a screen showing an example operation of image analysis of an image taken by an electron microscope.

[FIG. 4] This is a view for explaining a method of calculating the average diameter of the highest-stage projections, which is a screen showing an example operation of image analysis of an image taken by an electron microscope.

[FIG. 5] This is a view for explaining a method of calculating the average diameter of the highest-stage projections, which is a screen showing an example operation of image analysis of an image taken by an electron microscope.

[FIG. 6] This is a view for explaining a method of calculating the ratio of surface area of the highest-stage projections, which is a screen showing an example operation of image analysis of an image taken by an electron microscope.

[FIG. 7] This is a view for explaining a method of calculating the surface area ratio of the highest-stage projections, which is a screen showing an example operation of image analysis of an image taken by an electron microscope.

[FIG. 8A] This a view for explaining a method of calculating the surface area ratio of the highest-stage projections, which is an image taken by an atomic force microscope.

[FIG. 8B] This a view for explaining a method of calculating the surface area ratio of the highest-stage projections, which is a binarized data by an atomic force microscope.

[FIG. 9A] This is a view for explaining a method of calculating the ratio of surface area of the highest-stage projections, which is a screen showing an example operation of image analysis of an image taken by an atomic force microscope.

[FIG. 9B] This is a view for explaining a method of calculating the ratio of surface area of the highest-stage projections, which is a screen showing an example operation of image analysis of an image taken by an atomic force microscope.

[FIG. 9C] This is a view for explaining a method of calculating the ratio of surface area of the highest-stage projections, which is a screen showing an example operation of image analysis of an image taken by an atomic force microscope.

[FIG. 10A] This is a view for explaining a method of calculating the ratio of surface area of the highest-stage projections, which is a screen showing an example operation of image analysis of an image taken by an atomic force microscope.

[FIG. 10B] This is a view for explaining a method of calculating the ratio of surface area of the highest-stage projections, which is a screen showing an example operation of image analysis of an image taken by an atomic force microscope.

[FIG. 10C] This is a view for explaining a method of calculating the ratio of surface area of the highest-stage projections, which is a screen showing an example operation of image analysis of an image taken by an atomic force microscope.

[FIG. 11A] This is a view for explaining a method of calculating the ratio of surface area of the highest-stage projections, which is a screen showing an example operation of image analysis of an image taken by an atomic force microscope.

[FIG. 11B] This is a view for explaining a method of calculating the ratio of surface area of the highest-stage projections, which is a screen showing an example operation of image analysis of an image taken by an atomic force microscope.

[FIG. 11C] This is a view for explaining a method of calculating the ratio of surface area of the highest-stage projections, which is a screen showing an example operation of image analysis of an image taken by an atomic force microscope.

[FIG. 12A] This is a view for explaining a method of calculating the ratio of surface area of the highest-stage projections, which is a screen showing an example operation of image analysis of an image taken by an atomic force microscope.

[FIG. 12B] This is a view for explaining a method of calculating the ratio of surface area of the highest-stage projections, which is a screen showing an example operation of image analysis of an image taken by an atomic force microscope.

[FIG. 13A] This is a process chart showing an example of the method for manufacturing the functional film of the present invention.

[FIG. 13B] This is a process chart showing an example of the method for manufacturing the functional film of the present invention.

[FIG. 13C] This is a process chart showing an example of the method for manufacturing the functional film of the present invention.

[FIG. 13D] This is a process chart showing an example of the method for manufacturing the functional film of the present invention.

[FIG. 13E] This is a process chart showing an example of the method for manufacturing the functional film of the present invention.

[FIG. 13F] This is a process chart showing an example of the method for manufacturing the functional film of the present invention.

[FIG. 13G] This is a process chart showing an example of the method for manufacturing the functional film of the present invention.

[FIG. 14] This is a schematic cross-sectional view showing another example of the basic configuration of the functional film according to a comparative example.

[FIG. 15] This is a schematic cross-sectional view showing the other example of the basic configuration of the functional film according to a comparative example.

[FIG. 16] This is a schematic cross-sectional view showing an example of the specific configuration of a first reflectance adjusting layer unit provided to the functional film according to the present invention.

[FIG. 17] This is a schematic cross-sectional view showing an example of the specific configuration of a second reflectance adjusting layer unit provided to the functional film according to the present invention.

[FIG. 18A] This is an image of a functional film 1 according to an example of the present invention, captured by an electron microscope.

[FIG. 18B] This is an image of the functional film 1 according to an example of the present invention, captured by an electron microscope.

[FIG. 18C] This is a binarized data of the functional film 1 according to an example of the present invention, taken by an electron microscope.

[FIG. 19A] This is an image of a functional film 2 according to an example of the present invention, captured by an electron microscope.

[FIG. 19B] This is an image of a functional film 2 according to an example of the present invention, captured by an electron microscope.

[FIG. 19C] This is a binarized data of the functional film 2 according to an example of the present invention, taken by an electron microscope.

[FIG. 20A] This is an image of a functional film 3 according to an example of the present invention, captured by an electron microscope.

[FIG. 20B] This is an image of the functional film 3 according to an example of the present invention, captured by an electron microscope.

[FIG. 20C] This is an image of a functional film 3 according to an example of the present invention, captured by an electron microscope.

[FIG. 20D] This is a binarized data of the functional film 3 according to an example of the present invention, taken by an electron microscope.

[FIG. 21] This is an image of a functional film 4 according to an example of the present invention, captured by an electron microscope.

[FIG. 22A] This is an image of a functional film 5 according to an example of the present invention, captured by an electron microscope.

[FIG. 22B] This is an image of the functional film 5 according to an example of the present invention, captured by an electron microscope.

[FIG. 23A] This is an image of a functional film 6 according to an example of the present invention, captured by an electron microscope.

[FIG. 23B] This is an image of the functional film 6 according to an example of the present invention, captured by an electron microscope.

[FIG. 24A] This is an image of a functional film 7 according to an example of the present invention, captured by an electron microscope.

[FIG. 24B] This is a binarized data of the functional film 7 according to an example of the present invention, taken by an electron microscope.

[FIG. 25A] This is an image of a functional film 8 according to an example of the present invention, captured by an electron microscope.

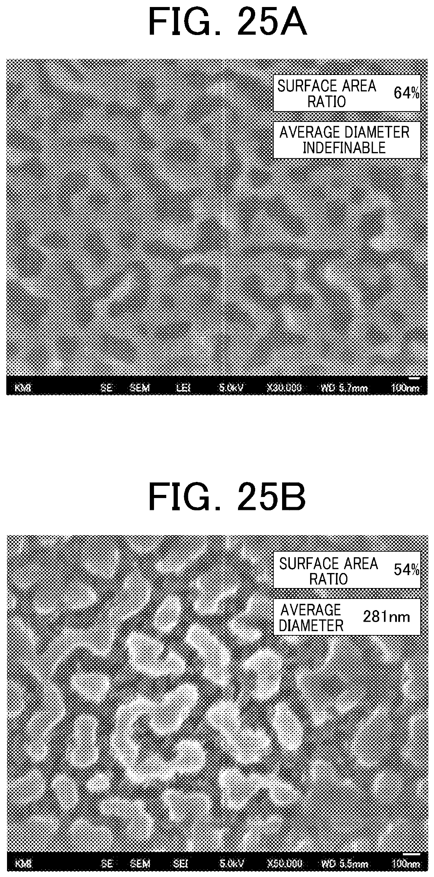

[FIG. 25A] This is an image of the functional film 8 according to an example of the present invention, captured by an electron microscope.

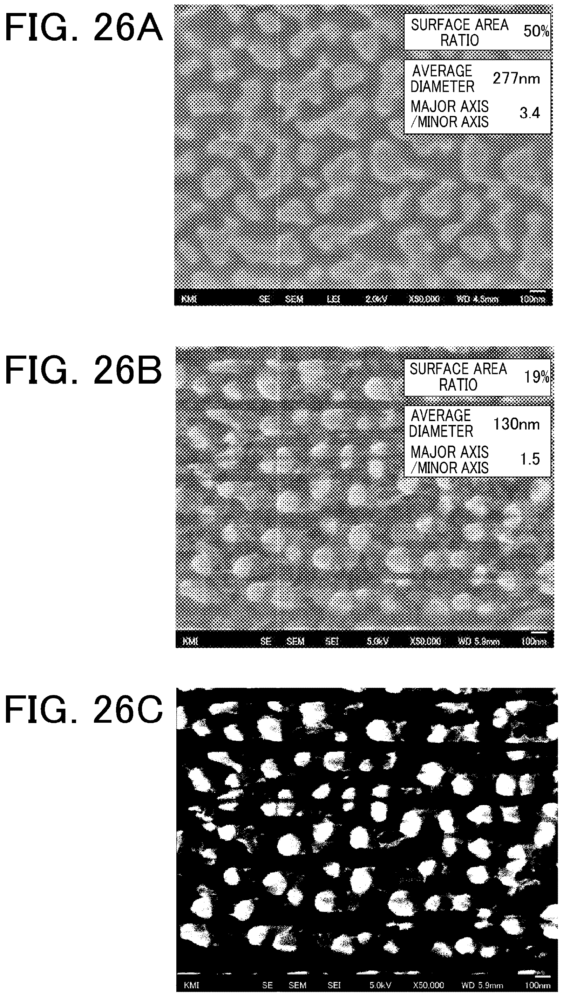

[FIG. 26A] This is an image of a functional film 9 according to an example of the present invention, captured by an electron microscope.

[FIG. 26B] This is an image of the functional film 9 according to an example of the present invention, captured by an electron microscope.

[FIG. 26C] This is a binarized data of the functional film 9 according to an example of the present invention, taken by an electron microscope.

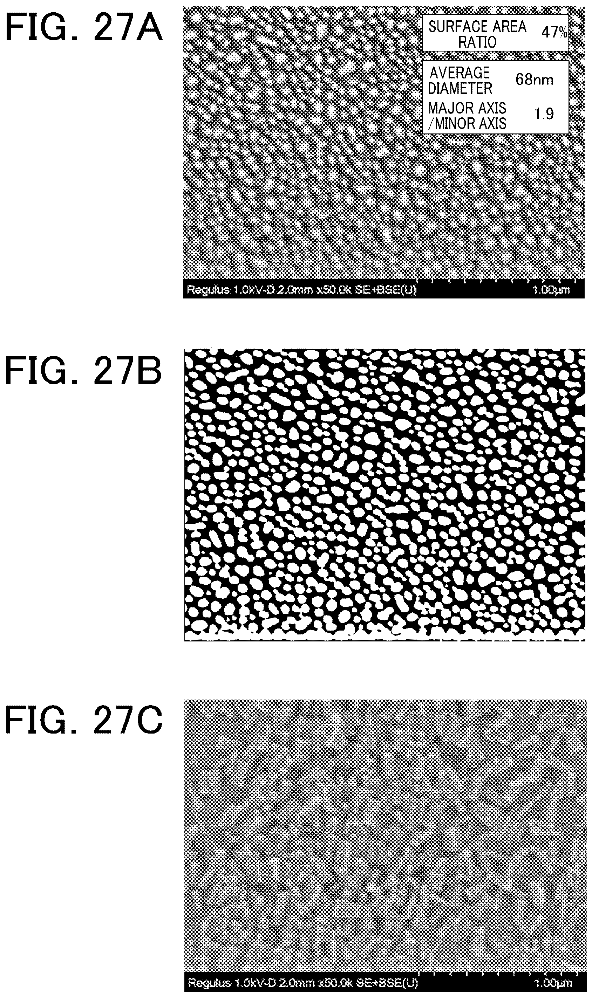

[FIG. 27A] This is an image of a functional film 11 according to an example of the present invention, captured by an electron microscope.

[FIG. 27B] This is a binarized data of the functional film 11 according to an example of the present invention, taken by an electron microscope.

[FIG. 27C] This is an image of a functional film 11 according to an example of the present invention, captured by an electron microscope.

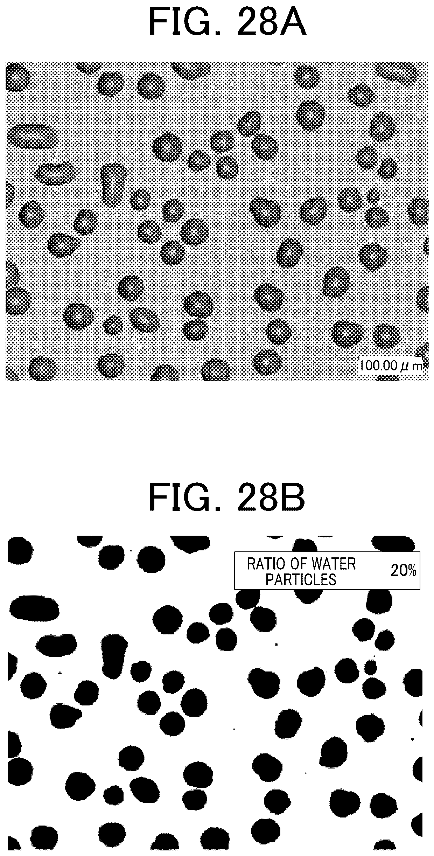

[FIG. 28A] This an image captured by an electron microscope showing evaluation of initial fogging property of the functional film 9 according to an example of the present invention.

[FIG. 28B] This a binarized data taken by an electron microscope showing evaluation of initial fogging property of the functional film 9 according to an example of the present invention.

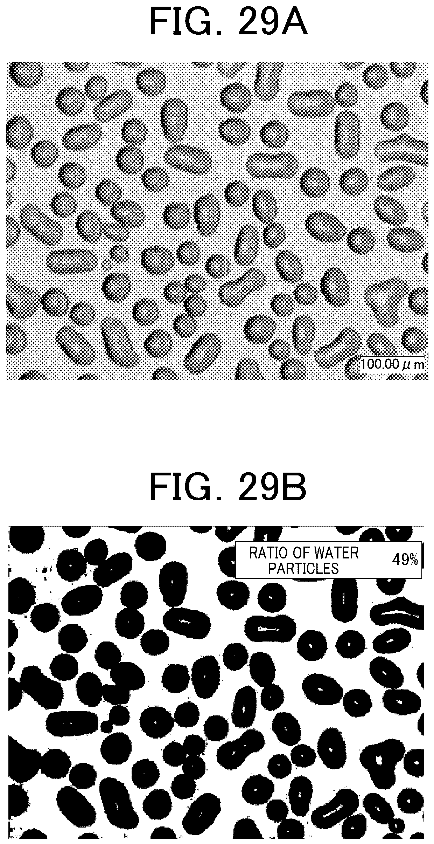

[FIG. 29A] This an image captured by an electron microscope showing evaluation of initial fogging property of the functional film 10 according to an example of the present invention.

[FIG. 29B] This a binarized data taken by an electron microscope showing evaluation of initial fogging property of the functional film 10 according to an example of the present invention.

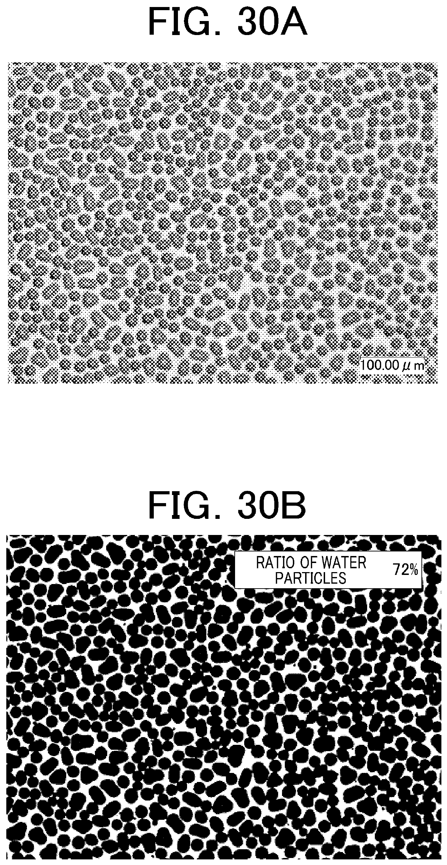

[FIG. 30A] This an image captured by an electron microscope showing evaluation of initial fogging property of the functional film 12 according to an example of the present invention.

[FIG. 30B] This a binarized data taken by an electron microscope showing evaluation of initial fogging property of the functional film 12 according to an example of the present invention.

Description of Embodiments

The functional film of the present invention contains an inorganic material as a main component and has a fine uneven structure on a surface, wherein in a vertical cross section in a film thickness direction, a plurality of projections constituting the fine uneven structure is formed in a stepped shape having more than one stage, the functional film satisfies the following Formula (I) where X is a Mohs hardness of the inorganic material, and an integer Y is the number of stages of the projections, and an average height from an lowermost bottom of lowest-stage projections of the plurality of projections to an outermost surface of highest-stage projections of the plurality of projections is 1 μm or less.

$$\text{Formula (I): } 10 \leq X \times Y$$

This feature is a technical feature common to or corresponding to each of the following embodiments.

In an embodiment of the present invention, in a plan view of the fine uneven structure, an average diameter of the highest-stage projections is within a range of 10 to 500 nm, a ratio of a surface area of the highest-stage projections to an entire surface area of the fine uneven structure is in a range of 30 to 70%, and in the vertical cross section of the fine uneven structure, an average height from a bottom of the highest-stage projections to an outermost surface of the highest-stage projections is in a range of 10 to 250 nm. This is preferable in terms of achieving both abrasion resistance and super water repellency.

In terms of durability, it is preferable that in a plan view of the fine uneven structure, at least a part of the plurality of projections has a ratio of a major axis diameter to a minor axis diameter (major axis diameter/minor axis diameter) of 2 or more.

In terms of achieving both abrasion resistance and super water repellency, it is more preferable that in a plan view of the fine uneven structure, at least a part of the plurality of projections has a mesh shape.

A mutual positional relationship and a shape of the plurality of projections are random and have no regularity in terms of identity or periodicity, because the functional film can prevent light diffraction when applied to an optical device.

In terms of achieving good abrasion resistance, it is preferable that the inorganic material includes a substance having a Mohs hardness of 9 or more.

In terms of achieving both abrasion resistance and super water repellency and applicability to an optical device requiring transparency, it is preferable that a main component of the inorganic material is silicon dioxide, and the integer Y is 2.

It is preferable that the functional film further comprises a slip coating on the plurality of projections because it is useful for prevention of fogging, adhesiveness becomes favorable, and deterioration of a contact angle after a rubbing test can be suppressed.

Further, in terms of water repellency, it is preferable that the functional film further comprises a film containing a water-repellent material on the projections.

In terms of achieving both abrasion resistance and super water repellency, it is preferable that a contact angle with water at 25°C is 130 degrees or more, and a decrease of the contact angle due to abrasion is 10 degrees or less.

The method for producing the functional film of the present invention comprises forming the fine uneven structure through steps of forming a film of a metal mask on an inorganic layer and processing the inorganic layer by dry etching. In particular, it is preferable that the method comprises at least two or more cycles of the steps of forming a film of a metal mask and processing by dry etching. This allows mass production and facilitates production since the steps do not require lithography such as exposure to light or a stamper.

Hereinafter, the present invention, constituent elements thereof, and modes and embodiments for carrying out the present invention will be described. In the present application, "to" is used to mean that numerical values described before and after "to" are included as the lower limit value and the upper limit value.

[Outline of Functional Film of the Present Invention]

The functional film of the present invention contains an inorganic material as a main component and has a fine uneven structure on a surface, wherein in a vertical cross section in a film thickness direction, a plurality of projections constituting the fine uneven structure is formed in a stepped shape having more than one stage, the functional film satisfies the following Formula (I) where X is a Mohs hardness of the inorganic material, and an integer Y is the number of stages of the projections, and an average height from an lowermost bottom of lowest-stage projections of the plurality of projections to an outermost surface of highest-stage projections of the plurality of projections is 1 μm or less.

$$\text{Formula (I): } 10 \leq X \times Y$$

Hereinafter, the average height from the lowermost bottom of the lowest-stage projections to the outermost surface of the highest-stage projections is also referred to as a "total average height".

In the present invention, the "fine uneven structure" is a structure having a plurality of fine uneven shapes capable of exhibiting a water repellent effect. The fine uneven structure refers to a structure having an uneven shape in which at least the average height of projections is 1 μm or less with respect to the lowermost bottom of the recesses, in other words, the average depth of the recesses is 1 μm or less.

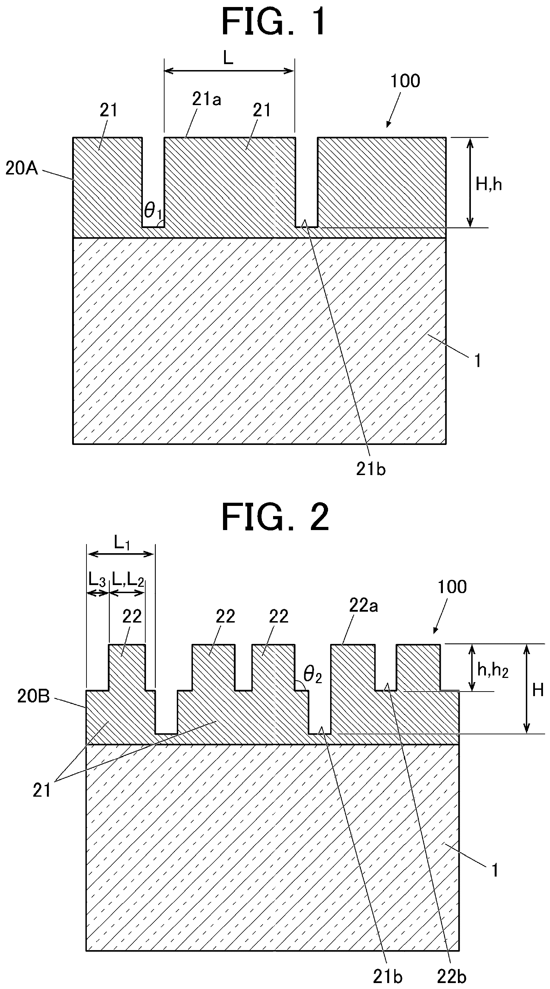

More than one stage of the projections according to the present invention are portion(s) where a length of the substantially horizontal portion ( $L_3$ in FIG. 2 in a case of a plurality of stages) is a 10 nm or more. The length of the substantially horizontal portion is preferably 30 nm or more, and particularly preferably in a range of 50 to 500 nm. The angle ( in a case of a plurality of stages, the angle $\theta_2$ in FIG. 2) formed between the substantially horizontal portion of the stage(s) and the vertical direction is within a range of 60 to 140 degrees, preferably within a range of 70 to 120 degrees.

Further, in the case of the multi-stage structure, specifically, it is preferable that least any one of the projections satisfies any of the following conditions (1) to (3); and it is preferable that least any one of the projections satisfies all the conditions (1) to (3).

(1) In the vertical cross section of the fine uneven structure, the average height (for example, $h_2$ in FIG. 2) of the upper-stage projections in the adjacent stages is equal to or greater than the 10 nm or more.

(2) In a top view of the fine uneven structure, the difference between the average diameter of upper-stage projections (for example, $L_2$ in FIG. 2) and the average diameter of lower-stage projections (for example, $L_1$ in FIG. 2) in adjacent stages is equal to or greater than a 10 nm.

(3) In a top view of the fine uneven structure, the difference between the ratio of the surface area of the upper-stage projections and the ratio of the surface area of the lower-stage projections in adjacent stages is 5% or more.

In (1), the average height $h_2$ is preferably 30 nm or more, particularly preferably in a range of 50 to 500 nm. In (3), it is more preferable that the difference in the ratio of the surface area is 10% or more.

Note that the measurement can be performed through general cross-sectional SEM observation or AFM observation, and an average value of values measured at 10 or more positions satisfy the above-described conditions.

The "lowermost bottom of a lowest-stage projection" refers to the surface included in the same reference plane as the above-described "lowermost bottom of recesses".

On the other hand, the "bottom of a highest-stage projection" described later refers to the surface included in the same plane as the lowermost bottom of the recess adjacent to the highest-stage projection.

The above definition will be described in detail in the description of shape observation using an atomic force microscope (AFM).

In addition, the definitions of the "average height of projections", the "average diameter of projections", and the "ratio of the surface area of projections" will also be described later.

FIGS. 1 and 2 are schematic cross-sectional views illustrating an example of the basic configuration of the functional film of the present invention.

As shown in FIGS. 1 and 2, the functional film 100 is formed on, for example, a substrate 1 which will be described later, contains an inorganic substance as a main component, and has a fine uneven structure 20A or 20B on the surface thereof. In a vertical cross-section taken in the thickness direction, the projections of the fine uneven structure 20A or 20B are formed in multi-stage shape.

In the present invention, the determination of "whether or not in a vertical cross-section taken in the film thickness direction, the projections of the fine uneven structure is formed in a multi-stage shape" and the confirmation of the shape can be performed under the conditions described later by a method of observing a cross-sectional shape of a three dimensional image obtained by measurement using an atomic force microscope (AFM), a method of observing a cross section of the functional film with an electron microscope, or a combination of both methods.

Specifically, FIG. 1 is a schematic cross-sectional view of a functional film according to a comparative example having single-stage projections. FIG. 2 is a schematic cross-sectional view of a functional film having a two-stage projections. In FIG. 1, a functional film 100 having a fine uneven structure 20A composed of a plurality of single-stage projections (first-stage projections 21) containing an inorganic substance is formed on a substrate 1.

In FIG. 2, a functional film 100 having a fine uneven structure 20B including a plurality of a two-stage projections containing an inorganic substance is formed on a substrate 1. That is, the fine uneven structure 20B includes the first-stage projections 21 formed on the substrate 1, and the second-stage projections 22 formed on the first-stage projections 21.

In the present application, the "first-stage projections 21" are projections formed on the substrate 1. The "second-stage projections 22" refers to projections formed on the first-stage projections 21.

< Mohs Hardness >

As the Mohs hardness in the present invention, a modified Mohs hardness modified in 15 grades is used.

In the present invention, the formula (I) is satisfied where the Mohs hardness of the inorganic substance contained as a main component in the functional film is represented by X, and the number of stages of the projections is represented by an integer Y Preferably, $14 \leq X \times Y \leq 39$.

When the number of the stages is 2 or more, it is only required that an inorganic substance having a Mohs hardness of 5 or more is contained.

The Mohs hardness of typical inorganic substances is shown below.

[Table 1]

Table I

| Modified Mohs Hardness | Standard Mineral Name | Chemical Composition | Hardness (HK) |
|---|---|---|---|
| 8 | Quartz, Crystal | $SiO_2$ | 820 |

(continued)

| Modified Mohs Hardness | Standard Mineral Name | Chemical Composition | Hardness (HK) |
|---|---|---|---|
| 9 | Topaz | $Al_2(F,OH)_2(SiO_4)$ | 1340 |
| 10 | Garnet | $(Mg,Ca,Fe)_3(Al.Cr,Fe)_2(SiO_4)_3$ | 1360 |
| 11 | Fused Zirconia Tantalum Carbide | $ZrO_2$ <br> TaC | (1160) 2000 |
| 12 | Corundum Tungsten Carbide | $Al_2O_3$ <br> WC | (2100) 1880 |
| 13 | Silicon Carbide | SiC | 2480 |
| 14 | Boron Carbide | $B_4C$ | 2750 |
| 15 | Diamond | C | 7000 |

The expression "containing an inorganic substance as a main component" in the present invention means that the proportion of the inorganic substance in all the components constituting the functional film is 80% by mass or more. The proportion of the inorganic substance is preferably 90% by mass or more and 99.9% by mass or less, more preferably 97% by mass or more and 100% by mass or less.

The inorganic substance is not particularly limited as long as it satisfies Formula (I), but the functional film preferably contains an inorganic substance having a Mohs hardness of at least 9 or more, and more preferably contains an inorganic substance having a Mohs hardness of 13 or more. When the projections of the fine uneven structure have two- or more-stage shape, the functional film may contain an inorganic substance having a Mohs hardness of 5 or less.

Examples of inorganic substances having a Mohs hardness of 9 or more include $Al_2(F, OH)_2(SiO_4)$, $(Mg, Ca, Fe)_3(Al, Cr, Fe)_2(SiO_4)_3$, $ZrO_2$, TaC, $Al_2O_3$, WC, SiC, $B_4C$, C, SiOC, SiCN and the like, and particularly, $Al_2O_3$, SiC, SiOC, SiCN, are preferably used.

The functional film using SiC, SiOC, or SiCN is suitably used for, for example, an inkjet head or a metal mold.

When the projections has two- or more-stage shape, transparent $SiO_2$ is preferably used. Specifically, such a functional film is suitably used for, for example, an optical device.

< Shape and Randomness of Projections >

It is an essential condition or a preferred condition that the shape of the projections of the fine uneven structure according to the present invention is, for example, a shape having a height, a size, or the like within the ranges described below.

However, when the projections in the fine uneven structure are observed as a whole, it is required from the viewpoint of preventing light diffraction that the mutual positional relationship and the shape of the plurality of projections have randomness, i.e. no regularity with respect to identity or periodicity within the ranges described later.

The term "randomness" as used in the present invention refers to a state in which randomness or unpredictability with no regularity such as overall identity or periodicity is recognized with respect to the mutual positional relationship, shape, and the like of the projections in the formation of the projections of the fine uneven structure under the assumption that the shape is controlled within the condition ranges described later. Specifically, it refers to the state shown in an electron micrograph obtained in an example described later. Further, it refers to the state where no diffracted light is generated.

In the present invention, the "state in which no diffracted light is generated" means that no diffracted light is generated due to interference between a plurality of reflected lights from the uneven portion of the fine uneven structure or interference between incident light and reflected light.

When the fine uneven structure is formed by an etching process using lithography or nanoimprint using a mold, the fine uneven structure has a regular uneven structure, and diffracted light is generated. However, in the present invention, since the fine uneven structure is formed by dry film formation as described later, an irregular (random) fine structure is formed, and thus diffracted light is not generated.

The presence or absence of the diffracted light can be confirmed, for example, by placing a sample of the functional film between a helium-neon laser and a screen, irradiating the screen with light through the sample, and visually observing the light irradiated on the screen.

In addition, in a top view of the fine uneven structure, it is more preferable that least some of the plurality of projections have a network shape from the viewpoint of satisfying both abrasion resistance and super water repellency.

The phrase "at least some of the projections has a network shape" refers to a state where, in a top view, for example, as illustrated in FIG. 25A, the projections are continuously connected and there is no portion in which the projections are not connected. That is, it refers to a network in a state where the major axis of the projections cannot be defined.

< Total Average Height >

In a vertical cross section in the film thickness direction of the fine uneven structure, the average height from the lowermost bottom of the lowest-stage projections to the outermost surface of the highest-stage projections is 1 $\mu$m or less.

In the present invention, the "average height from the lowermost bottom of the lowest-stage projections to the outermost surface of the highest-stage projections" refers to, for example, the total etching depth in a vertical cross section (cross section in the thickness direction) of the fine uneven structure when the recesses are formed by etching the formed inorganic layer. Hereinafter, the "average height from the lowermost bottom of the lowest-stage projections to the outermost surface of the highest-stage projections" is also referred to as a "total average height H".

To be specific, when the projections have a two-stage shape, as illustrated in FIG. 2, the "total average height H" refers to the distance H from the lowermost bottom (base end face) 21b of the first-stage (lowest-stage) projections 21 to the outermost surface (topmost surface) 22a of the second-stage (highest-stage) projections 22.

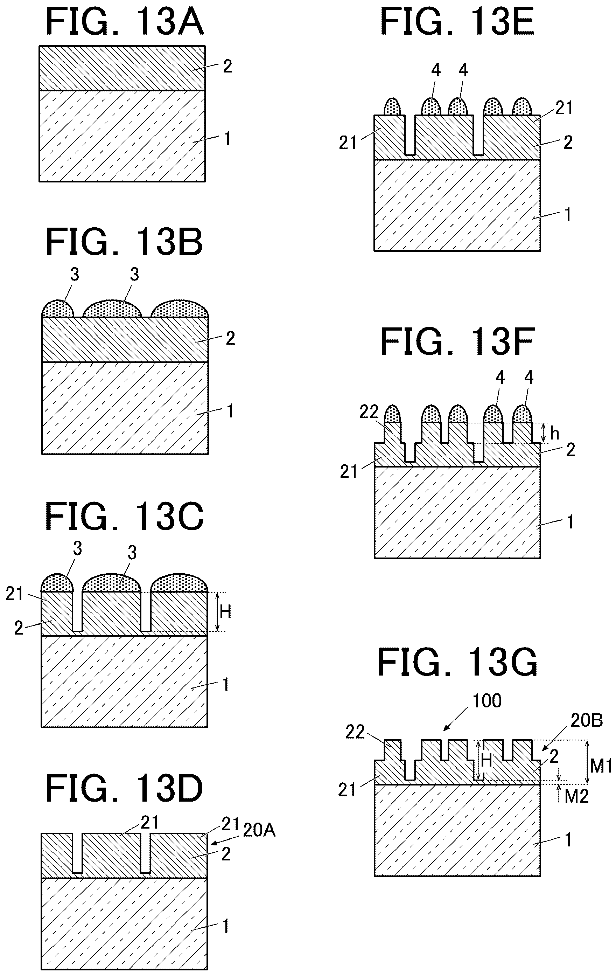

Therefore, as illustrated in FIGS. 13A to 13G, the "total average height H" refers to the distance H obtained by subtracting the thickness M2 of the non-etched inorganic layer 2 from the total thickness M1 of the inorganic layer 2 formed by the method for producing the functional film 100.

In addition, in a case where the projections have a one-stage shape, as shown in FIG. 1, the "total average height H" refers to a distance H from the lowermost bottom (base end surface) 21b to the outermost surface (topmost surface) 21a of the highest-stage projections 21. Similarly, the "total average height H" refers to the distance H obtained by subtracting the thickness M2 of the non-etched inorganic layer 2 from the total thickness M1 of the inorganic layer 2 formed by the method for producing the functional film.

The total average height H is 1 $\mu$m or less, preferably within a range of 0.05 to 0.25 $\mu$m.

The total average height H can be calculated by an image analysis method using an atomic force microscope (AFM) as described later.

Examples of methods for achieving a total average height of 1 $\mu$m or less include controlling the thickness of the inorganic layer to be formed, and as described later, controlling the thickness of the metal mask, a film formation temperature of the metal mask, the etching time and the like.

< Average Diameter, Surface Area Ratio, and Average Height of highest-stage projections >

It is more preferable that the average diameter of the highest-stage projections in a top view of the fine uneven structure is within a range of 10 to 500 nm from the viewpoint of achieving both the rubbing resistance and the super water repellency. In addition, it is more preferable that the ratio of the surface area of the highest-stage projections to the surface area of the entire fine uneven structure is within a range of 30 to 70%, from the viewpoint of achieving both rubbing resistance and super water repellency. Furthermore, in a vertical cross section of the fine uneven structure, it is preferable that the average height from the bottom surfaces of the highest-stage projections to the outermost surface of the highest-stage projections is within a range of 10 to 250 nm from the viewpoint of achieving both scratch resistance and super water repellency.

The average diameter of the highest-stage projections is preferably within a range of 10 to 500 nm, more preferably within a range of 50 to 200 nm.

In the present invention, the "average diameter of the highest-stage projections" is an average diameter of the highest-stage projections in a plan view of the fine uneven structure, that is, when the entire fine uneven structure is photographed from the top by an electron microscope and the photograph is observed. In addition, in the case of the fine uneven structure 20B having two-stage projections as shown in FIG. 2, the "average diameter of the highest-stage projections" refers to the average diameter L of the second-stage (highest-stage) projections 22.

The average diameter L of the highest-stage projections can be calculated by taking a photograph with an electron microscope as described later, and then using image processing free software "Image J (created by Wayne Rasband, Image J1. 32S)" for the image photograph taken.

The ratio of the surface area of the highest-stage projections to the total surface area of the entire fine uneven structure is preferably in the range of 30 to 70%, and more preferably in the range of 30 to 55%.

In the present invention, "the ratio of the surface area of the highest-stage projections to the total surface area of the entire fine uneven structure" is the ratio of the surface area of the highest-stage projections to the surface area of the entire fine uneven structure (the entire fine uneven structure including all projections recesses) when the fine uneven structure is viewed from above. The "when the fine uneven structure is viewed from the top" is when the entire fine uneven structure is photographed from the top by an electron microscope and the photograph is observed.

The ratio of the surface area of the highest-stages projections can be calculated by taking a photograph with an electron microscope and using image processing free software "Image J (produced by Wayne Rasband, Image J1, 32S)" for the photograph as described later. Alternatively the ratio may be calculated by measuring image data of the fine uneven structure using an AFM and binarizing the obtained AFM measurement image using software manufactured by BRUKER.

If the needle of the AFM does not enter a narrow groove (recess), data to be obtained from two-stage projections is similar to that from a one-stage projections. Therefore, it is preferable to select a super sharp cantilever or a cantilever for high aspect ratio as much as possible.

When the projections have a two-stage shape, the average height from the bottom to the outermost surface of the highest-stage projections is preferably in the range of 10 to 150 nm, and more preferably in the range of 30 to 100 nm. When the projections have a three-stage shape, the average height from the bottom to the outermost surface of the highest-stage projections is preferably within a range of 10 to 100 nm, and more preferably within a range of 20 to 50 nm

In the present invention, for example, in a case of the fine uneven structure 20B having projections in a two-stage shape as shown in FIG. 2, the "the average height from the bottom to the outermost surface of the highest-stage projections" refers to the distance h from the lowermost bottom 22b of the second-stage (highest-stage) projections 22 to the outermost surface (topmost surface) 22a of the second-stage (highest-stage) projections 22 in a vertical cross section (cross section in the thickness direction) of the fine uneven structure. The "average height from the bottom of the highest-stage projection to the outermost surface" is also referred to as an "average height h".

The average height h from the bottom to the outermost surface of the highest-stage projections can be calculated by using an atomic force microscope as described later, or by observing a cross section of the projections with an SEM.

Examples of methods for achieving the average diameter L, the ratio of the surface area, and the average height h of the highest-stage projections within the above-described respective ranges include controlling the thickness of the inorganic layer to be formed, and as described later, controlling the thickness of the metal mask, the film formation temperature of the metal mask, the etching time, and the like.

In addition, in a top view of the fine uneven structure, it is preferable that the ratio of the major axis diameter to the minor axis diameter (major axis diameter/minor axis diameter) of at least a part of the projections among the plurality of projections is 2 or more in terms of durability. The ratio is more preferably 5 or more. Specifically, for example, in a top view, the projections have preferably an L-shape or the like rather than a complete circle shape.

Here, the "major axis diameter of a projection" is the diameter when a minimum circumscribed circle C1 is drawn on the projection when the fine uneven structure is observed with SEM in a "method of calculating an average diameter of the highest-stage projections" described later. The "minor axis diameter of a projection" refers to a diameter when a maximum inscribed circle C2 is drawn on the projection.

In addition, the projections having a ratio of the major axis diameter to the minor axis diameter of 2 or more may be either first-stage projections or second- or later-stage projections. When the projections have such a ratio in any stage, the durability is excellent, which is preferable. In practice, it is preferable that the projections have such a ratio in the first stage.

In addition, when the fine uneven structure is viewed from the top, it is preferable that the average diameter of the highest-stage projections is smaller than the average diameter of the lower-stage projections, from the viewpoint of satisfying both the super water repellency and the scratch resistance.

For example, as shown in FIG. 2, in the case of the fine uneven structure 20B having two-stage projections, the average diameter L of the highest-stage (second-stage) projections 22 is preferably in the range of 10 to 500 nm as described above. The average diameter of the lower-stage (first-stage) projections 21 is preferably within a range of 100 to 1000 nm. In the case of the three-stage shape, the average diameter of the highest-stage (third-stage) projections is preferably in the range of 10 to 500 nm, the average diameter of the middle-stage (second-stage) projections is preferably in the range of 100 to 600 nm, and the average diameter of the lowest-stage (first-stage) projections is preferably in the range of 100 to 1000 nm.

The average diameter of the lower-stage projections may be calculated by the above-described method before the higher-stage projections are formed.

The plurality of projections 21 and the plurality of projections 22 are formed randomly because light diffraction can be prevented when the functional film is applied to an optical device.

< Method for Calculating Average Diameter of highest-stage Projections >

The average diameter of the highest-stage projections can be calculated by capturing an image of the fine uneven structure with a scanning electron microscope (SEM) or a transmission electron microscope (TEM) and using the image processing free software "Image J (created by Wayne Rasband, Image J1, 32S)" for the captured image.

Hereinafter, the procedure of image analysis using an electron micrograph (SEM) will be described.

1) Download the free software Image J.
2) Perform image processing according to the following procedure with the default setting.

3) Read a surface SEM image of the fine uneven structure photographed in advance at a magnification of 30,000 times or more using a scanning electron microscope into a personal computer using the free software Image J.

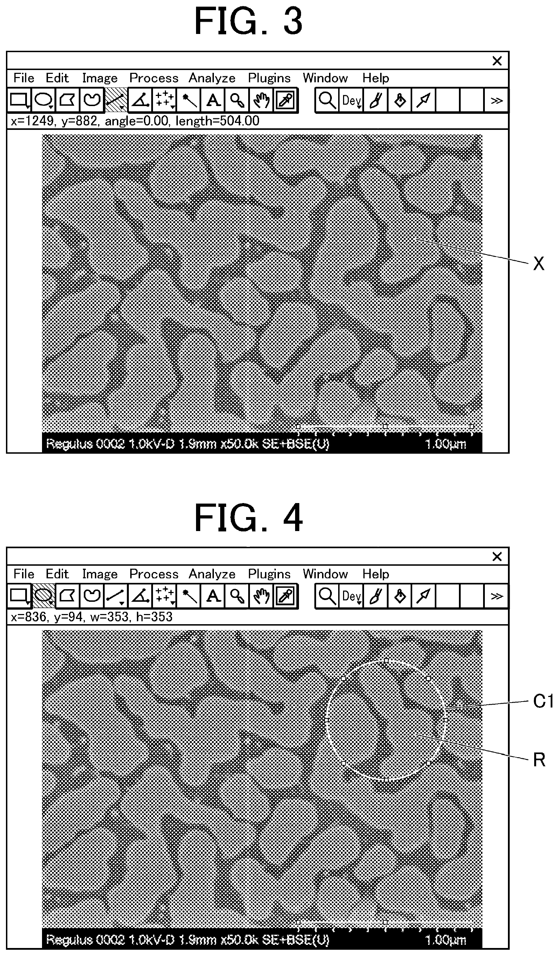

4) Correlate the number of pixels with the physical length. For example, in the case of FIG. 3, 1 $\mu$m = 504 pixels.

5) Measure the major axis diameter.

As illustrated in FIG. 4, for a predetermined particle (for example, the particle R), a minimum circumscribed circle C1 is written using a circle drawing tool. In this case, the above w = h = 353 is the number of pixels indicating the diameter (major axis diameters) of the minimum circumscribed circle C1. That is, the physical length is 353/504 = 0.700 $\mu$m.

6) Measure minor axis diameter.

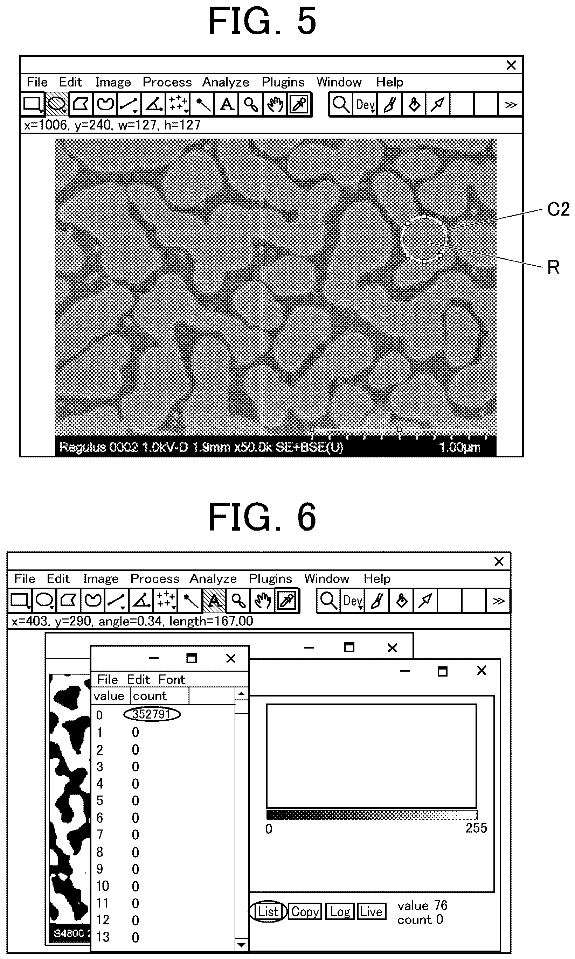

As shown in FIG. 5, for the particle R, a maximum inscribed circle C2 is drawn using a circle drawing tool. The above w = h = 127 is the number of pixels indicating the diameter (minor axis diameter) of the maximum inscribed circle C2. That is, the physical length is 127/504 = 0.251 $\mu$m.

7) Calculate the average diameter.

The average value of the measured major axis diameter and minor axis diameter is calculated.

Specifically, (0.700 + 0.251)/2 = 0.475 $\mu$m is referred to as the diameter of the particle R illustrated in FIG. 5.

In this way, the diameters of 10 random particles are calculated by the same method, and the average value of the 10 diameters is determined as the average diameter as a representative of the sample.

< Ratio of Surface Area of highest-stage Projections >

The ratio of the surface area of the highest-stage projections to the surface area of the entire fine uneven structure can be calculated by the following two methods.

The first calculation method is a method in which a photograph is taken by an SEM, and then structural analysis is performed on the taken photograph by using an image processing free software "Image J (Image J 1. 32S, produced by Wayne Rasband)". The second calculation method is a method in which image data of the fine uneven structure is measured using an AFM, binarizing the AFM measured image obtained using a software manufactured by BRUKER so as to calculate the ratio.

In the present invention, any of the image analysis method using a SEM and the image analysis method using an AFM can be used, and it is only required that the value calculated by either image analysis method may fall within the ranges of the present invention.

(Image Analysis by SEM)

Hereinafter, the procedure of the image analysis using an electron micrograph (SEM) will be described.

1) Read a surface SEM image of the fine uneven structure photographed in advance at a magnification of 30,000 times or more using a scanning electron microscope into a personal computer using the free software Image J. Since the SEM image is changed by adjustment of focus, contrast, and brightness, it is preferable not to make it artificial.

2) Set the definition of black and white.

When the Black Background is checked in the free software Image J, the brightness value 0 is represented by black, and the brightness value 255 is represented by white. When the Black Background is not checked, the brightness value 0 is represented by white, and the brightness value 255 is represented by black. In the present analysis, analysis was performed with the Black Background checked (i.e., 255 is white).

3) Denoise the image.

Smoothing is performed.

4) Apply a band-pass filter.

For example, the recommended value of the band-pass filter is from 20 to 100. Since the value depends on the initial SEM image, it is preferable to appropriately set an optimal value.

5) Binarize the image.

The image is converted to an 8-Bit image and set a threshold value. The threshold value is set at the right end of the bar so that the above bar (area selected by green) becomes 0% in the following setting. The threshold on the below bar (area selected in blue) is adjusted so that bar overlaps the black area of the pores.

Since this threshold value varies depending on the contrast of the image, it is preferable that the threshold value is not fixed but set by the analyst every time.

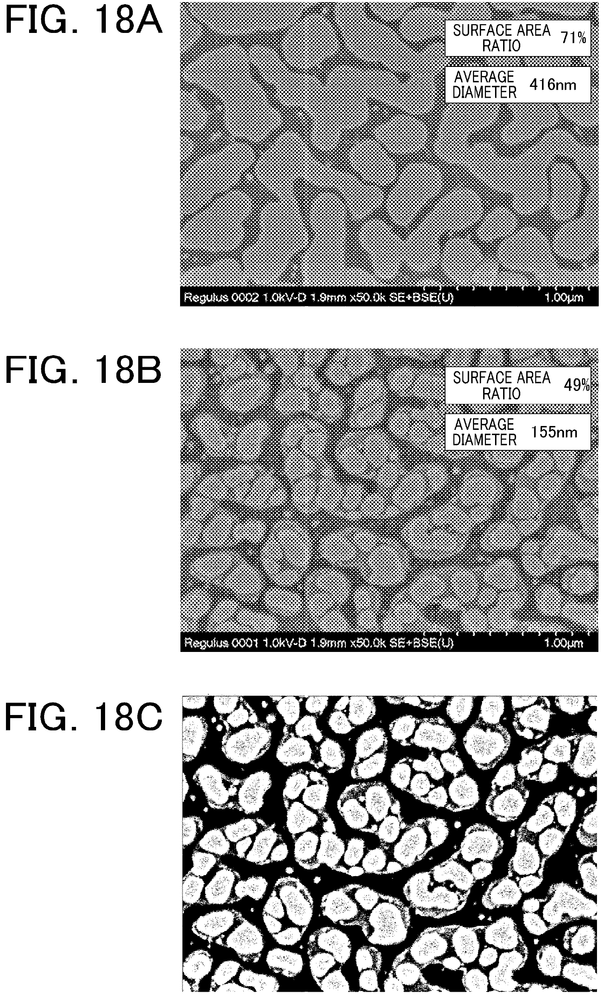

When the threshold is determined, a black-and-white image is obtained. For example, in the binarized image shown in FIG. 18C, a white part is the highest-stage projections (for example, the second-stage projections 22 in FIG. 2), and a black part is a portion excluding the highest-stage projections 22 (for example, the first-stage projection 21 in FIG. 2).

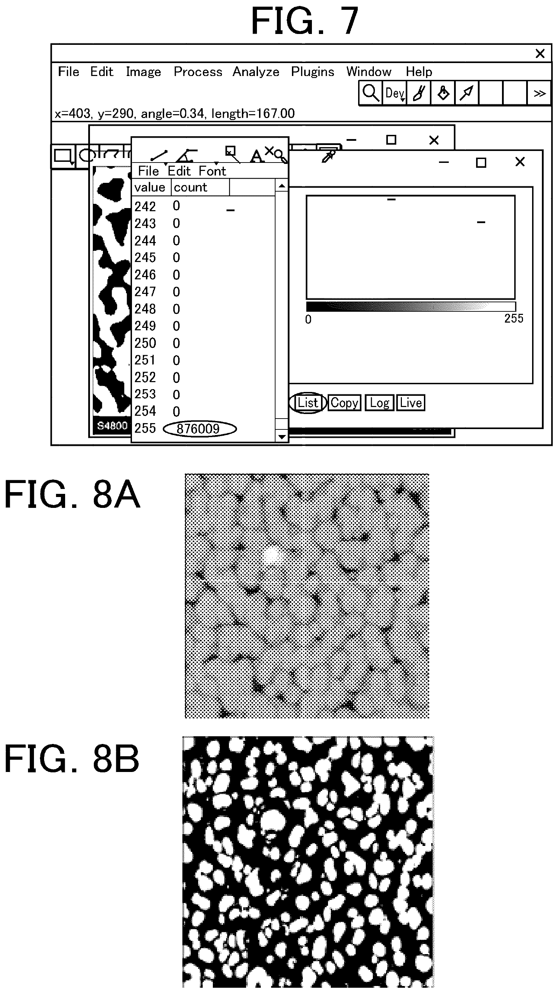

6) Operate Image J to call a histogram (see FIGS. 6 and 7).

The histogram is displayed. Then, as shown in FIG. 6, the marked List button is clicked with a mouse to display the data of the histogram so that the numbers of pixels of the respective gray levels are displayed.
In the example of FIG. 6, it is shown that 352791 pixels have Value = 0 (i.e., black pixels).
Similarly, in the example of FIG. 7, it is shown that 876009 pixels have Value = 255 (i.e., white pixels).

7) Determine the area ratio.

Since the highest-stage projections are white pixels, the number of white pixels/(the number of white pixels + the number of black pixels) = the area ratio of the highest-stage projections to the entire area.
In the example of FIGS. 6 and 7, {876009/(352791 + 876009)} $\times$ 100 = 71% is the area ratio of the highest-stage projections.
If information at the time of SEM image measurement is included in the analysis image, it is preferable to perform image analysis after a step of excluding it or the like so that the information does not affect the analysis.

(Image Analysis by AFM)

Next, the procedure of image analysis by an AFM will be described.
An atomic force microscope (AFM) is a type of scanning probe microscope (SPM), and is a device for measuring a nano-level uneven structure based on an atomic force between a sample and a specimen.
Specifically, an AFM brings a cantilever in which a sharp probe is attached to a tip of a minute spring plate close to a distance of several nm from a sample surface, and measures unevenness of the sample based on an interatomic force acting between an atom at the tip of the probe and an atom of the sample. The atomic force microscope (AFM) performs scanning while applying feedback to a piezo scanner so that the atomic force becomes constant, that is, the deflection of the cantilever becomes constant. Then, by measuring the displacement amount fed back to the piezo scanner, the AFM measures the Z-axis displacement, that is, the uneven structure of the surface.
In the present invention, as the atomic force microscope (AFM), the L-trace W manufactured by Hitachi High - Technologies Corporation was used. As a probe, the SI-DF40P2, which is a silicon probe also manufactured by Hitachi High - Technologies Corporation, was used.

A) Acquiring Roughness Image of Fine Uneven Structure by AFM

Three dimensional uneven image data of the fine uneven structure of the functional film is obtained using the atomic force microscope (AFM) (see FIG. 8A).

B) binarization of AFM data

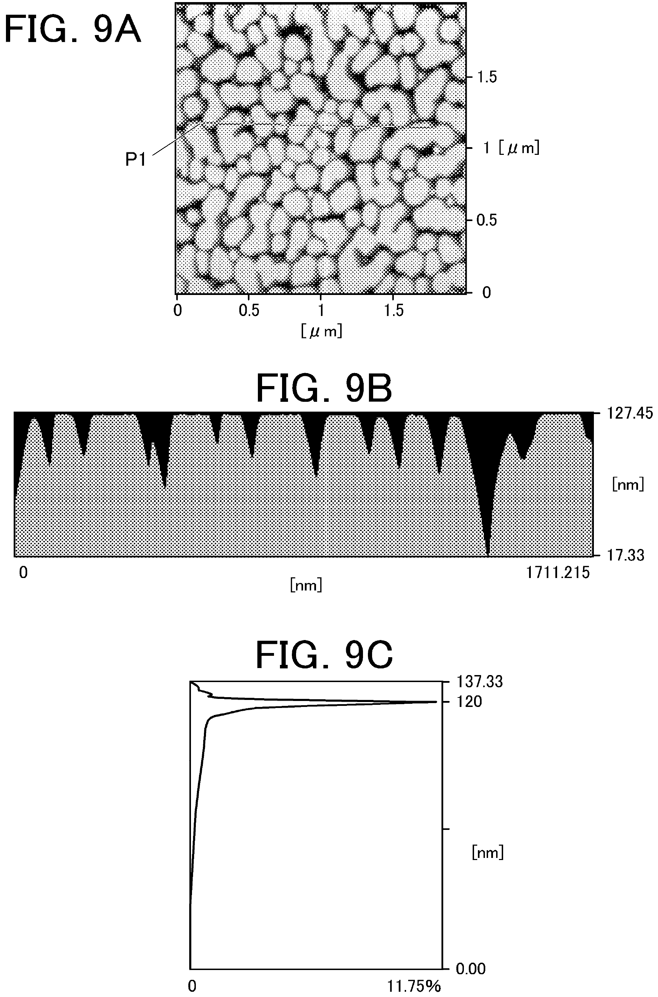

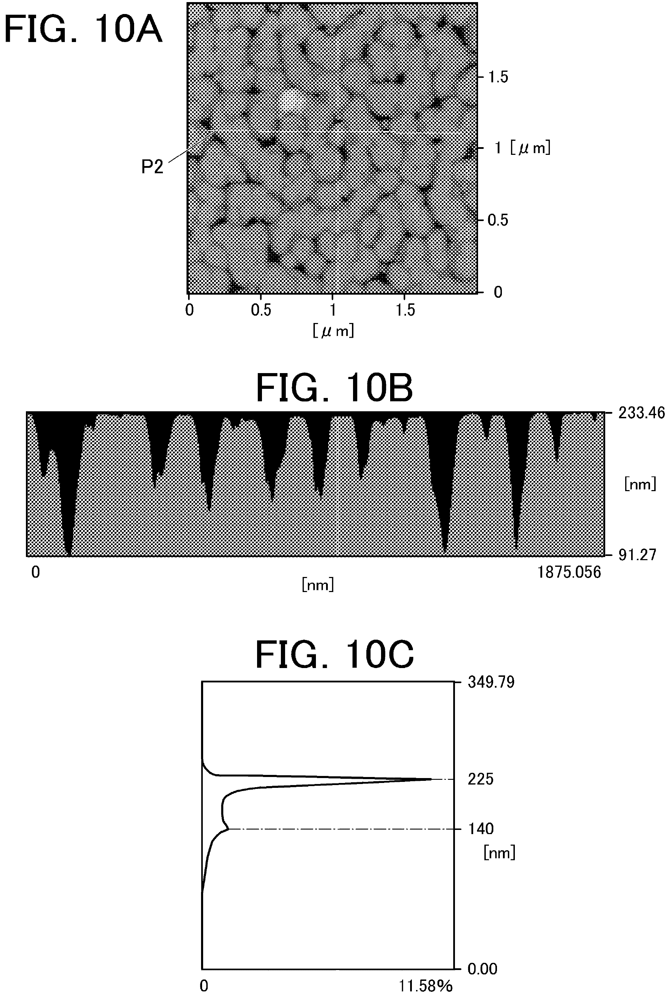

The obtained AFM measurement image is binarized using software manufactured by BRUKER Corp. FIG. 8B shows the binarized data.
The AFM data is composed of a collection of three dimensional data. The data is plotted on a graph in which the vertical axis represents the depth and the horizontal axis represents the number of pieces of data at the depth, and the following example is obtained.
In the case of the one-stage structure, as shown in FIG. 9C, peaks of the number of pieces of data appear at the surface and the bottom. (In the case of a two-stage structure, as illustrated in the FIG. 10C, peaks of the number of pieces of data appear on the first-stage surface and the second-stage surface.)
In order to obtain the occupied area of the projections on the outermost surface, binarization (color editing) is performed in which the threshold value is set to an intermediate point between the peak of the number of pieces of data on the surface and the peak of the number of pieces of data below the surface. In the case of the one-stage structure, the bottom becomes "the peak of the number of pieces of data below the surface", and in the case of the two-stage structure, the first-stage surface becomes "the peak of the number of pieces of data below the surface".
To be specific, FIGs. 9A and 9B show a case of a comparative one-stage structure, and FIG. 9B is a cross-sectional profile taken along the cutting line P1 of FIG. 9A where the horizontal axis represents a scanning location, and the vertical axis represents depth data. The vertical axis represents the distance from the deepest point when the deepest point in FIG. 9A is set as the zero reference. FIG. 9C is a diagram of the number of pieces of data in a depth direction.
As shown in the FIG. 9C, the height from the bottom to the outermost surface at the peak of the number of pieces of data is a 120 nm, and this level is the outermost surface of the first-stage (highest-stage) projections. Accordingly, binarization (color edit) is performed with the intermediate point (60nm) of the height (120nm) at the peak of the number of pieces of data on the highest-stage surface as a threshold. Specifically, points higher than the intermediate point height are displayed in white, and points lower than the intermediate point height are displayed in black.

In addition, FIGs. 10A and 10B show a case of a two-stage structure, and FIG. 10B is a cross-sectional profile taken along the cutting line P2 of FIG. 10A, and the vertical axis and the horizontal axis are as described for FIG. 9B. FIG. 10C is a diagram of the number of pieces of data in the depth direction.

As shown in the FIG. 10C, the height from the bottom to the outermost surface at the peak of the number of pieces of data is a 225 nm, and this level is the outermost surface of the second-stage (highest-stage) projections. Furthermore, a data peak indicating the top surface of the first-stage projection is detected at a height of 140 nm from the bottom.

Accordingly, binarization (color edit) is performed with the intermediate point (182.5 nm) between the peak (225 nm) of the number of pieces of data indicating the second-stage surface and the peak (140 nm) of the number of pieces of data indicating the first-stage surface as the threshold. Specifically, points higher than the intermediate point height are displayed in white, and points lower than the intermediate point height are displayed in black.

Furthermore, in the present invention, the term "outermost surface of the highest-stage projections" refers to a tip surface at a height at which the number of pieces of data (frequency) is the greatest, in a histogram as illustrated in FIG. 9 which is created on the basis of data obtained by AFM measurement (see FIGs. 9C and 10C).

The "lowermost bottom of the lowest-stage projections" refers to a surface included in the same plane as a surface at a depth with the largest number of pieces deepest data among the bottom surfaces of the recesses in the histogram (see FIGs. 9C and 10C).

The "bottom of the highest-stage projection" refers to a surface included in the same plane as the lowermost bottom of the recess adjacent to the uppermost projection (see 10C in the drawing). That is, the "bottom of the highest-stage projection" refers to a surface included in the same plane as surfaces at a depth with the largest number of pieces of the deepest data among the bottom surfaces of the adjacent recesses in the histogram.

Next, the ratio of the surface area of the highest-stage projections is measured in the same manner based on the image created as described above using the free software Image J which is the aforementioned image analysis software.

A detailed measuring method is as follows.

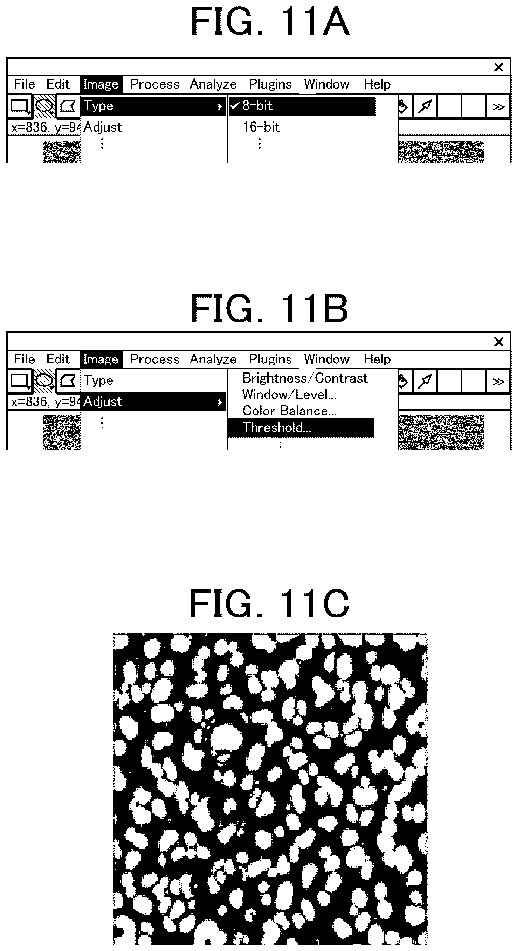

Although the binarization has already been completed according to the above-described method, it is preferable to perform binarization processing also by the image processing software for the sake of caution. The image is converted to an 8-Bit image in a default setting, and then binarized with a threshold value of Threshold = 128 as (see FIG. 11).

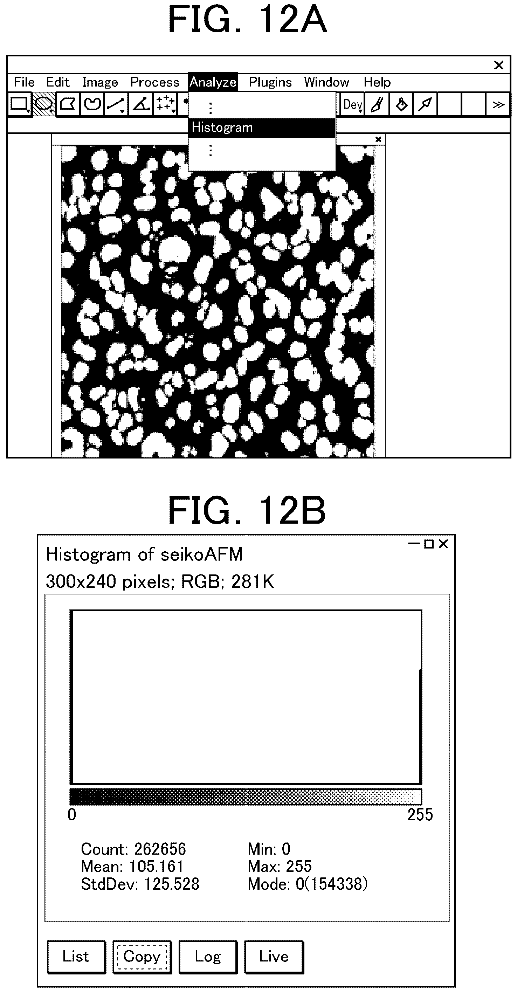

Next, a histogram of the binarized AFM image is created (see FIG. 12).

The number pieces of black or white data is counted, and the ratio of the number of pieces of data of the outermost surface structure (white) is obtained. In this example, the ratio of the surface area was 41%.

< Total Average Height and Average Height of highest-stage Projections >

The total average height H and the average height h of the highest-stage projections are calculated by measuring image data of the fine uneven structure using an AFM and using the software manufactured by BRUKER.

Specifically, an arbitrary cross section of 1 $\mu$m or more is analyzed, and the distance between the plane at a height with the largest number of pieces of data (frequency) of surfaces and the plane at a depth with the largest number of pieces of the deepest data is calculated. This distance is analyzed for random 10 arbitrary cross sections, and the average value thereof is defined as the total average height H.

Further, the average height h of the highest-stage projections is obtained as the difference between the peak of the number of pieces of data of the surface and the peak of the number of pieces of data therebelow. That is, in the case of a one-stage structure, the bottom surface is the "peak of the number of pieces of data therebelow", and in the case of a two-stage structure, the surface of the first stage is the "peak of the number of pieces of data therebelow". Also in this case, the difference is calculated for 10 random cross sections, and the average value thereof is set as the average height h.

< Slip Coating >

It is preferable that the functional film according to the present invention comprises a slip coating on the projections, because the slip coating is effective for preventing fogging, has good adhesiveness, allows achieving both scratch resistance and super water repellency, and can be applied to optical devices. Preferred are slip coatings that have physical properties such that the angle of contact is from 40 degrees to 120 degrees when a single coating of 100 nm is formed on a white glass substrate manufactured by SCHOTT Co. and left at a room temperature for three days. In particular, it is more preferable that the difference from the contact angle of the main component constituting the fine structure is 20 degrees or more.

Examples of the slip coating include $Ta_2O_5$ - $TiO_2$(product name: OA-600, manufactured by Canon Optron Inc.),

$Ta_2O_5$, $TiO_2$, SiC, $Al_2O_3$, $HfO_2$ and the like.

Examples of the method of forming the slip coating include an ion assisted deposition method (IAD method), a sputtering method, and a CVD method, in addition to a typical vacuum deposition method. The thickness of the slip coating is preferably in a range of 0.1 to 20 nm.

< Water-Repellent Film >

The functional film of the present invention preferably includes a film containing a water-repellent material (hereinafter, also referred to as a "water-repellent film") on the projections from the viewpoint of improvement in water repellency.

Examples of the water-repellent material include fluorine-based or silicon-based water-repellent materials, and specific examples thereof include FLUOROSURF (manufactured by Fluoro Technology Co., Ltd), OPTOOL (manufactured by Daikin Industries, Ltd), and SC100 (manufactured by Canon Optron Inc).

Examples of the method for forming the water-repellent film include a spin coating method, a dip coating method, and a vacuum deposition method.

Method for Manufacturing Functional Film

In the method for producing the functional film of the present invention, the fine uneven structure is formed through the steps of forming a metal mask on an inorganic layer and processing the inorganic layer by dry etching.

Specifically, the fine uneven structure is formed by forming an inorganic layer containing an inorganic substance as a main component on a substrate, forming a metal mask on the inorganic layer, and processing it by dry etching. In particular, it is preferable that the method comprises at least two or more cycles of the steps of forming a film of a metal mask and processing by dry etching.

FIG. 13 is a process chart illustrating an example of the method for producing the functional film. In the following description, a method for producing the functional film having a fine uneven structure composed of two-stage projections will be described, but the present invention is not limited to the production method described below.

(1) Film formation of Inorganic Layer

As shown in the FIG. 13A, an inorganic layer 2 containing an inorganic substance as the main component is formed on a substrate 1 by, for example, a dry film forming method.

The thicknesses of the inorganic layers vary depending on the type of the inorganic substance, and in a case where the inorganic substance is $SiO_2$, the thickness is preferably within a range of 100 to 400 nm, and in a case where the inorganic substance is SiC, the thickness is preferably within a range of 100 to 1000 nm. In a case where the inorganic substance is SiOC, the thickness of the inorganic layer is preferably within a range of 100 to 500 nm. When the inorganic material is SiCN, the thickness of the inorganic layer is preferably within a range of 100 to 500 nm.

(2) First Film Formation of Mask

Next, as illustrated in FIG. 13B, a mask 3 is formed on the inorganic layer 2. Examples of the mask 3 include a metal mask constituted of a metal portion and an exposed portion.

The layer thickness of the metal mask is preferably in a range of 20 to 100 nm.

Although depending on the film formation conditions, for example, when a metal mask is formed by a vapor deposition method at a substrate temperature of 370°C and a rate of 3 Å to a layer thickness of 2 nm, the metal mask has a particle shape. In addition, for example, when the metal mask is formed at a substrate temperature of 170°C and a rate of 3 Å to a layer thickness of 12 to 15 nm by a vapor deposition method, the metal mask tends to have a mesh shape. Furthermore, for example, when the metal mask is formed using a sputtering method at a substrate temperature of 30°C and a rate of 3 Å to a layer thickness of 10 nm, the metal mask tends to have a porous shape.

As described above, the average diameter, the ratio of the surface area, and the average height of the projections formed by etching are controlled by changing the film formation conditions of the metal mask, the substrate temperature, the film formation rate, and the film formation thickness.

Therefore, in a case of a functional film having a fine uneven structure including two-stage projections as in the present embodiment, it is preferable that the thicknesses of the metal mask for forming the first-stage projections is within a range of 20 to 100 nm. In addition, it is preferable that the thicknesses of the metal mask for forming the second-stage projections, which are described later, is within a range of 5 to 70 nm.

Further, in the present invention, the metal mask is formed of, for example, silver (Ag), Al, or the like, and silver is particularly preferable. The film formation temperature of the metal mask is preferably within a range of 20 to 400°C.

The average diameter L, the ratio of the surface area, and the average height h of the projections formed by etching are also controlled by changing the temperature for forming the metal mask.

Therefore, in a case of a functional film having a fine uneven structure including two-stage projections as in the present embodiment, it is preferable that the film formation temperature of the metal mask for forming the first-stage projections is within a range of 150 to 400°C. In addition, it is preferable that the film formation temperature of the metal mask for forming the second-stage projections is within a range of 100 to 400°C.

(3) First Etching

Next, as illustrated in FIG. 13C, an etching apparatus (not illustrated) is used to etch the inorganic layer 2 through the mask 3 to the vicinity of the substrate 1 to form recesses, thereby the projections 21 are formed. In this step, it is preferable that the surface of the substrate 1 is not exposed. Specifically, the etching time is controlled so that the total average height H becomes 1 $\mu$m or less.

Although it is not necessarily within this range depending on the performance of the device, it is preferable that the frequency of the RF power supply at the time of etching is as low as possible from the viewpoint of reducing the cost of the mass production device and an advantage in increasing the size.

The frequency is preferably equal to or lower than 1 MHZ, more preferably 400 KHZ. In view of increasing the selection ratio of the metal mask, the electric power for etching is preferably 1 W/cm$^2$ or less, and more preferably 0.1 W/cm$^2$ or less. In addition, it is desirable that the substrate has a cooling device or a heat dissipation mechanism in terms of increasing the selection ratio of the mask. In a case where a cooling mechanism or the like is not provided, it is desirable to provide a standby time by stopping power as appropriate for cooling, or to completely stop once to expose the mask to the atmosphere to radiate heat, or to intermittently input power while turning on and off power using a pulse power supply.

The etching time is preferably within a range of 30 to 3000 seconds.

For the etching, an etching device for reactive dry etching or an IAD vapor deposition device in which an etching gas is introduced is used. As an etching gas, for example, $CHF_3$, $CF_4$, $COF_2$, $SF_6$, or the like is used. The inorganic layer 2 is etched to the vicinity of the upper surface of the substrate 1 in a predetermined size, and a plurality of recesses are formed, whereby the projections 21 are formed. That is, the constituent layer corresponding to the exposed portion of the metal mask 3 is etched.

(4) First Mask Peeling

Next, as illustrated in FIG. 13D, the mask 3 formed on the surface is removed.

Specifically, the metal mask is removed by wet etching using a chemical agent such as acetic acid, iodine, or potassium iodide. The metal mask may be removed by, for example, dry etching using Ar or $O_2$ as an etching gas.

By removing the mask 3, the fine uneven structure 20A having the first-stage projections 21 is formed.

(5) Second Film Formation of Mask

Next, as illustrated in FIG. 13E, a mask 4 is formed on the first-stage projections 21. As for the mask 4, the same mask as the mask 3 for the first-stage projections 21 can be used.

The thickness of the mask used for forming the second-stage projections and the film formation temperature are as described above.

(6) Second Etching

Next, as shown in the FIG. 13F, the surface of the inorganic layer 2 is etched to a predetermined range using an etching device from the front side through the mask 4 to form recesses, thereby forming projections 22. In this step, it is preferable to control the etching time so that the average height h of the highest-stage projections 22 falls within the above-described range.

The etching time is preferably within a range of 30 to 2000 seconds.

(7) Second Mask Peeling

Next, as illustrated in FIG. 13G, the mask 4 formed on the surface is removed. In this way, the fine uneven structure 20B having the first-stage projections 21 and the second-stage projections 22 are formed.

(8) Formation of Slip Coating and Water-Repellent Film

Next, it is preferable to form a slip coating (not shown) on the two-stage projections (the first-stage projections 21 and the second-stage projections 22) by using, for example, a dry film forming apparatus.

Finally, it is preferable to form a water-repellent film (not illustrated) on the slip coating using a wet film forming apparatus.

Through the above steps, the functional film 100 of the present invention can be obtained.

In the above-described manufacturing method, a method for manufacturing a functional film having a fine uneven structure 20B composed of two-stage projections has been described. Further, the production method is applicable to a method for producing a functional film having a fine uneven structure including three- or more-stage projections.

In a case of producing a functional film having a fine uneven structure formed of three-stage projections, it is preferable that the thickness of the metal mask for forming the first-stage projections is within a range of 20 to 100 nm. In addition, it is preferable that the depth of the metal mask for forming the second-stage projection is within a range of 5 to 70 nm. Further, it is preferable that the thicknesses of the metal mask for forming the third-stage projections is within a range of 2 to 10 nm. It is preferable that the film formation temperature of the metal mask for forming the first-stage projections is withing a range of 150 to 400°C. It is preferable that the film formation temperature of the metal mask for forming the second-stage projections is within a range of 100 to 400°C. It is preferable that the film formation temperature of the metal mask for forming the third-stage projections is within a range of 100 to 400°C.

Furthermore, although the fine uneven structure having a plurality of projections is formed by forming a metal mask on the inorganic layer and performing etching in the above-described production method, it is not limited thereto. For example, a method may be used in which a metal mask is formed on a substrate in advance, and an inorganic substance is formed into a film through the metal mask by a dry film forming apparatus, thereby forming a fine uneven structure having a plurality of projections.

<Substrate>

The substrate on which the functional film of the present invention is formed is not particularly limited, and for example, is preferably composed of an inorganic material, an organic material, or a combination thereof.

Examples of the inorganic material include glass, fused quartz glass, synthetic quartz glass, silicon, and chalcogenide. Examples of the organic material include polyethylene terephthalate (PET), an acrylic resin, a vinyl chloride resin, a cycloolefin polymer (COP), a cycloolefin copolymer (COC), a polymethyl methacrylate resin (PMMA), a polycarbonate resin (PC), polypropylene (PP), and polyethylene (PE). Examples of the ultraviolet curable resin include radical polymerization type acrylate resins, urethane acrylates, polyester acrylates, polybutadiene acrylates, epoxy acrylates, silicon acrylates, amino resin acrylates, ene-thiol resins, cationic polymerization type vinyl ether resins, alicyclic epoxy resins, glycidyl ether epoxy resins, urethane vinyl ethers and polyester vinyl ethers, and examples of the thermosetting resin include epoxy resins, phenol resins, unsaturated polyester resins, urea resins, melamine resins, silicon resins and polyurethanes. The substrate may have a film of an organic material formed on an inorganic material such as glass.

In the present invention, when the functional film of the present invention is used for an optical device as described later, glass is preferably used as the substrate from the viewpoint of transparency. When the functional film of the present invention is used in an inkjet head, silicon is preferably used as the substrate. Furthermore, when the functional film is used for a mold, it is preferable to use SiC, cemented carbide or the like as the substrate.

< Reflectance Adjusting Layer Unit>

Between the functional film of the present invention and the substrate, at least one reflectance adjusting layer unit may be provided. Hereinafter, the reflectance adjusting layer unit will be described.

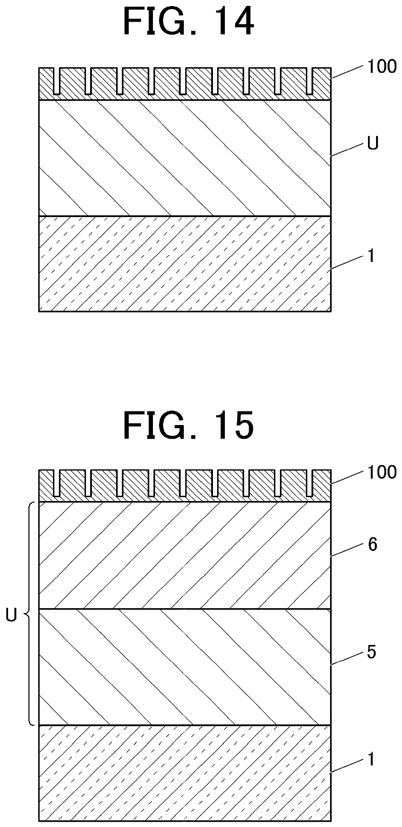

FIG. 14 is a cross-sectional view showing a comparative example of the configuration in which a reflectance adjusting layer unit is provided between the functional film of the present invention and a substrate. As shown in FIG. 14, it is preferable that the reflectance adjusting layer unit U is provided on the substrate 1, and the functional film 100 of the present invention is provided thereon. FIG. 14 and the subsequent drawings illustrates a comparative example an example where the functional film 100 has the fine uneven structure 20A including one-stage projections, but a fine uneven structure including two- or more-stage projections may be applied.

The reflectance adjusting layer unit includes a first reflectance layer unit composed of at least one low refractive index layer and at least one high refractive index layer, and a second reflectance adjusting layer unit composed of at least one low refractive index layer and one high refractive index layer in the written order. Further, in the first reflectance adjusting layer unit, it is preferable that a layer at a position farthest from the substrate is a photocatalyst layer containing a metal oxide having a photocatalytic function, for example, $TiO_2$.

FIG. 15 is a cross-sectional view showing a comparative example of a configuration in which the first and second reflectance adjusting layer units are provided between the functional film of the present invention and the substrate.

The configuration shown in FIG. 15 shows an example in which the reflectance control layer unit U shown in FIG. 14 is constituted of a first reflectance adjusting layer unit 5 and a second reflectance adjusting layer unit 6.

(First Reflectance Adjusting Layer Unit 5)

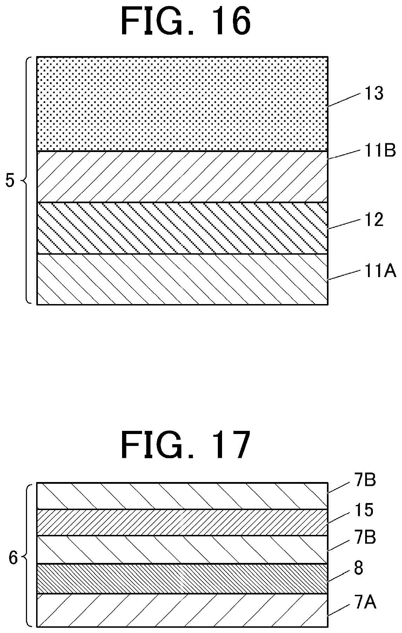

FIG. 16 is a cross-sectional view showing an example of a specific configuration of the first reflectance adjusting layer unit constituting the functional film described in FIG. 15.

As a configuration example of the first reflectivity adjusting layer unit 5 shown in FIG. 16, the first reflectance adjusting layer unit 5 includes the following first low-refractive index layer 11A, a high-refractive index layer 12, a second low-refractive index layer 11B, and a photocatalyst layer 13.

1) First low-refractive index layer 11A: constituent material = $SiO_2$, layer thickness = 22 mn
2) High-refractive index layer 12: constituent material = $Ta_2O_5$ - $TiO_2$, layer thickness = 18 nm
3) Second low-refractive index layer 11B: constituent material = $SiO_2$, layer thickness = 33 mn
4) Photocatalyst layer 13: constituent material = $TiO_2$, layer thickness = 112 nm Next, the details of each constituent element of the first reflectance adjusting layer unit will be described.

<First Low-Refractive Index Layer and Second Low-Refractive Index Layer>

The first low-refractive index layer and the second low-refractive index layer according to the present invention are formed of a material having a refractive index of less than 1.7, and in the present invention, it is preferable that the first low-refractive index layer and the second low-refractive index layer are layers containing $SiO_2$ as a main component. However, it is also preferable to contain other metallic oxides. A mixture of $SiO_2$ and $Al_2O_3$, $MgF_2$ or the like is also preferable from the viewpoint of light reflectance.

< High-Refractive Index Layer >

In the present invention, the high-refractive index layer is composed of a material having a refractive index of 1.7 or more. The material is preferably, for example, a mixture of an oxide of Ta and an oxide of Ti, an oxide of Ti, an oxide of Ta, or a mixture of an oxide of La and an oxide of Ti, or the like. The metal oxide used for the high-refractive index layer more preferably has a refractive index of 1.9 or more. In the present invention, $Ta_2O_5$ and $TiO_2$ are preferred, and $Ta_2O_5$ is more preferred.

In the present invention, the thickness of the first reflectance adjusting layer unit composed of the high-refractive index layer and the low-refractive index layer is not particularly limited, but is preferably 500 nm or less from the viewpoint of antireflection performance, and more preferably in a range of 50 to 500 nm. When the thickness is 50 nm or more, an antireflection optical property can be exhibited. In a case where the thickness is 500 nm or less, the error sensitivity decreases, and the non-defective rate of the spectral characteristics of the lens can be improved.

< Photocatalyst Layer>

In the first reflectance adjusting layer unit according to the embodiment of the present invention, an aspect in which a photocatalyst layer having a photocatalytic function is provided as the outermost layer is preferable.

It is preferable that the photocatalyst layer according to the present invention is formed of $TiO_2$ as a metal oxide having a photocatalytic function. This is preferable because the photocatalyst layer has a high refractive index and can reduce the light reflectance of the dielectric multilayer film.

In the present invention, the "photocatalytic function" refers to an organic substance decomposition effect by a photocatalyst. That is, when $TiO_2$ having a photocatalytic property is irradiated with ultraviolet light, an active oxygen or a hydroxyl radical ($\cdot$ OH radical) is generated after an electron is emitted, and an organic substance is decomposed by a strong oxidizing force thereof. By adding a functional layer containing $TiO_2$ to the dielectric multilayer film of the present invention, it is possible to prevent an organic substance or the like adhering to an optical member from contaminating an optical system as a stain.

Whether or not a sample has a photocatalytic effect can be determined, for example, by irradiating a sample colored with a pen of methylene blue ink with ultraviolet light at an integral of 20 J under an environment of 20°C and 80% RH, and evaluating the changes in the color of the pen in a stepwise manner. Examples of specific photocatalytic performance testing methods, with respect to self-cleaning by ultraviolet irradiation, include for example, the methylene blue decomposition method (ISO 10678 (2010)) and the resazurin ink decomposition method (ISO 21066 (2018)).

In the present invention, it is preferable that the reflectance adjusting layer unit includes the first reflectance adjusting layer unit composed of at least one low refractive index layer and at least one high refractive index layer and the second reflectance adjusting layer unit including a low-refractive index layer, a high-refractive index layer, and a low-refractive index layer are provided on a substrate in the written order. Then, it is preferable that after forming the reflectance adjusting layer unit having a configuration in which the layer of the first reflectance adjusting layer unit located at the farthest position from the substrate is a photocatalyst layer containing a metal oxide having a photocatalytic function, the functional film having a fine uneven structure of the present invention is formed as described later.

(Second Reflectance Adjusting Layer Unit)

FIG. 17 shows an example of a specific configuration of the second reflectance adjusting layer unit.
In the present invention, the second reflectance adjusting layer unit 6 is preferably configured to include at least a low-refractive index layer, a high-refractive index layer, and a salt spray protection layer.
In the configuration example of the second reflectance adjusting layer unit 6 shown in FIG. 17, an example of a configuration in which the following constituent layers (five layers) are laminated from the bottom (substrate side) is shown.

1) Low-refractive index layer 7A: constituent material = $SiO_2$, layer thickness = 28 nm
2) High-refractive index layer 8: constituent material = $TiO_2$, layer thickness = 1 nm
3) Low-refractive index layer 7B: constituent material = $SiO_2$, layer thickness = 30 nm
4) Salt spray protection layer 15: constituent material = $TiO_2$, layer thickness = 1 nm
5) Low-refractive index layer 7B: constituent material = $SiO_2$, layer thickness = 3 nm

The salt spray protection layer as used herein is a layer having a function of preventing the lower layers from being damaged by salt water in a salt spray test.
By providing the second reflectance adjusting layer unit between the first reflectance adjusting layer unit and the functional film, the average light reflectance of the functional film can be controlled to satisfy a desired condition of, for example, 3.0% or less while providing the photocatalyst layer.
In the case of adopting a configuration in which a photocatalyst layer is provided, it is preferable to form the projections by performing etching to the photocatalyst layer.

(Method of Forming Reflectance Control Layer Unit Constituent Layer)

(Method for Forming Salt Spray Protection Layer)

The film formation method of the first reflectance adjusting layer unit composed of the low-refractive index layer and the high-refractive index layer, and the second reflectance adjusting layer unit composed of the low-refractive index layer, the high-refractive index layer and the salt spray protection layer is not particularly limited, but is preferably a dry film forming method.
Examples of a dry film forming method applicable to the present invention include vapor deposition methods such as a vacuum deposition method and an ion beam deposition method, an ion plating method, and sputtering methods such as a sputtering method, an ion beam sputtering method and a magnetron sputtering method. Among them, the aforementioned ion assisted deposition method (IAD method) of the deposition methods or sputtering methods are preferable.

[Application Fields of Functional Film]

< Optical Device >

The functional film of the present invention is a functional film having both abrasion resistance and super water repellency, and in the present invention, is an optical device including the functional film of the present invention. Further, the optical device is preferably a lens, a cover glass of a lens, an antibacterial cover member, an antifungal coating member, or a mirror. The optical device is suitably used for, for example, an in-vehicle lens, a communication lens, an antibacterial lens for an endoscope, an antibacterial cover member for a PC or a smartphone, glasses, ceramics such as a toilet or tableware, an antifungal coating for a bath or a sink, or a building material (window glass), and is particularly suitable as an in-vehicle lens.
In addition, in the optical device to which the functional film of the present invention is applied, the substrate is preferably glass from the viewpoint of transparency. The inorganic substance contained in the functional film as the main component is preferably $SiO_2$ of a Si-containing material from the viewpoint that a reaction product of fluorine gas is easily formed and etching is easily performed.

< Inkjet Head >

The functional film of the present invention can also be applied to an inkjet head. That is, the inkjet head of the present invention includes the functional film.

In addition, in the inkjet head to which the functional film of the present invention is applied, the substrate is preferably silicon from the viewpoint of durability and processing characteristics. The inorganic substance contained as the main component in the functional film is preferably SiC from the viewpoint of ink wiping properties.

< Mold >

The functional film of the present invention can also be applied to a mold. That is, the mold of the present invention includes the functional film.

Further, in the mold to which the functional film of the present invention is applied, the substrate is preferably SiC or a cemented carbide from the viewpoint of strength. The inorganic substance contained in the functional film as the main component is preferably SiC of a Si-containing material from the viewpoint that a reaction product of fluorine gas is easily formed, etching is easily performed, and SIC is hard.

Example

Hereinafter, the present invention will be specifically described with reference to Examples, but the present invention is not limited thereto. Note that in the following examples, operations were performed at room temperature (25°C) unless otherwise specified. Further, unless otherwise specified, "%" and "part (s)" mean "% by mass" and "part(s) by mass", respectively.

[Production of Functional Film 1]

< Preparation of Substrate >

A white glass substrate (refractive index: 1.523) manufactured by SCHOTT AG was prepared as a substrate.

< Film Formation of Inorganic Layer 1 >

The inorganic layer 1 containing $SiO_2$ ($SiO_2$ layer) was formed on the substrate under the following conditions.

(Chamber Condition)
Heating temperature: 370°C
Starting vacuum degree: $5.0 \times 10^{-3}$ Pa
(Evaporation Source of Film Forming Material)
Electron gun
(IAD Ion Source)
RF ion source NIS-175 3 by Shincron Co., Ltd.
Film forming material of inorganic layer: $SiO_2$ (by Canon Optron, trade name of $SiO_2$).

The substrate was placed in an IAD vacuum vapor deposition apparatus, $SiO_2$ was loaded into a first evaporation source as a film forming material, and vapor deposition was performed at a film forming rate of 3 Å/sec to form an inorganic layer 1 ($SiO_2$ layer) having a thickness of 360 nm.

The IAD conditions were as follows: an acceleration voltage of 1000 V, an acceleration current of 1000 mA, a suppresser voltage of 500 V, a neutralization current of 1500 mA. The IAD introduction gas was $O_2$ 50 sccm, Ar gas 0 sccm, and neutral gas Ar 10 sccm.

< First Film Formation of Ag Mask >

An Ag mask was formed on the formed inorganic layer. For film formation of the Ag mask, a film forming apparatus (BMC-800T, manufactured by Synchron, Inc) was used, the film was formed under the following conditions to form the Ag mask. The thickness of the Ag mask was 30 nm.

Heating temperature: 370°C
Starting vacuum degree: $1.33 \times 10^{-3}$ Pa
Film formation rate: 3 Å/sec

< First Etching >

After the Ag mask was formed, a film was formed under the following conditions using CE 300I (manufactured by ULVAC, Inc) as an etching apparatus. The average diameter L and the average height h of the projections were adjusted by changing the etching time.

Antenna RF: 400 W
Bias RF: 38 W
APC pressures: 0. 5 Pa
$CHF_3$ Flow rate: 20 sccm
Total etching time: 160 seconds

In a case where the sample was heated, etching was performed while cooling the sample multiple times such that the total etching time was 160 seconds as described above. In this way, the first-stage projections were formed.

< First Peeling of Ag Mask >

After the first-stage projections were formed, the sample was immersed in Pure Etch Au100 (Hayashi Pure Chemical Industries, Ltd) for 5 seconds, and the Ag mask was peeled off. Thereafter, the sample was washed with pure water and cleaned with a UV ozone device (manufactured by Technovision Corporation) for 600 seconds.

After forming the first-stage projections in this manner, an electron photograph was taken using a scanning electron microscope. The results are illustrated in FIG. 18A.

< Second Film Formation of Ag Mask >

An Ag mask was formed on the first-stage projections in the same manner as in the above-described "first film formation of Ag mask" except that the thickness of the Ag mask was changed to 15 nm.

< Second Etching >

After the Ag mask was formed, a film was formed under the following conditions using CE 300I (manufactured by ULVAC, Inc) as an etching apparatus. The average diameter L and the average height h of the projections were adjusted by changing the etching time.

Antenna RF: 400 W
Bias RF: 38 W
APC pressures: 0. 5 Pa
$CHF_3$ Flow rate: 20 sccm
Total etching time: 40 seconds

If the sample was heated, etching was performed in a plurality of times while cooling the sample so that the total etching time was 40 second as described above. In this manner, the second-stage projections were formed.

< Second Peeling of Ag Mask >

After the second-stage projections were formed, the Ag mask was peeled off in the same procedure as the above-described "first peeling of Ag mask". The sample was washed with pure water and cleaned with a UV ozone apparatus.

After forming the second-stage projections in this manner, an electron photograph was taken using a scanning electron microscope. The results are illustrated in FIG. 18B. Also, the binarized data thereof is shown in FIG. 18C.

< Formation of Water-Repellent Film >

After forming the second-stage projections, the sample was subjected to cleaning with a UV ozone device for 600 s (Technovision Corporation). Thereafter, the sample was spin-coated with 100 μL of FLUOROSURF (manufactured by Fluoro Technology Inc) under conditions of a rotation number of 3000 rpm and then dried at room temperature for 24 hours to form a water-repellent film.

Thus, the functional film 1 was obtained.

[Production of Functional Film 2]

A functional film 2 was produced in the same manner as in the production of the functional film 1, except that the thickness of the Ag mask was changed as shown in Table II below.

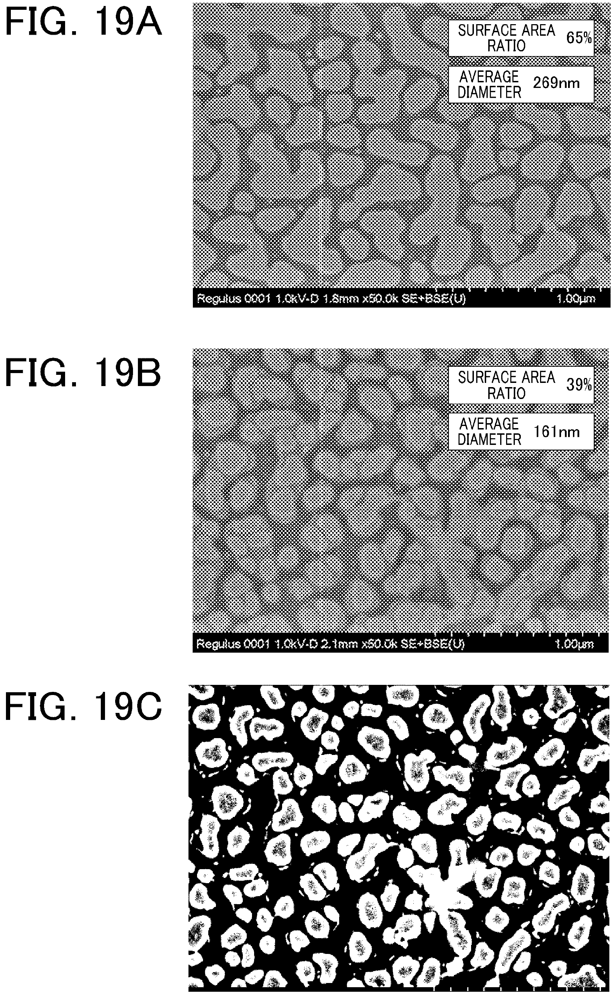

With respect to the functional film 2, a SEM photograph after the formation of the first-stage projections is shown in FIG. 19A, a SEM photograph after the formation of the second-stage projections is shown in FIG. 19B, and the binarized data of FIG. 19B is illustrated in FIG. 19C.

[Production of Functional Film 3]

In the production of the functional film 1, after the second release of the Ag mask, the following "third formation of Ag mask", "third etching", and "third peeling of Ag mask" are performed, in addition, the thicknesses of the Ag masks in the first and second formation, the film formation temperature, the total etching time, and the like were changed as shown in Table II below. A functional film 3 was produced in the same manner except that after the third peeling of the Ag mask, a slip coating shown below was formed, and then a water-repellent film similar to the water-repellent film of the functional film 1 was formed.

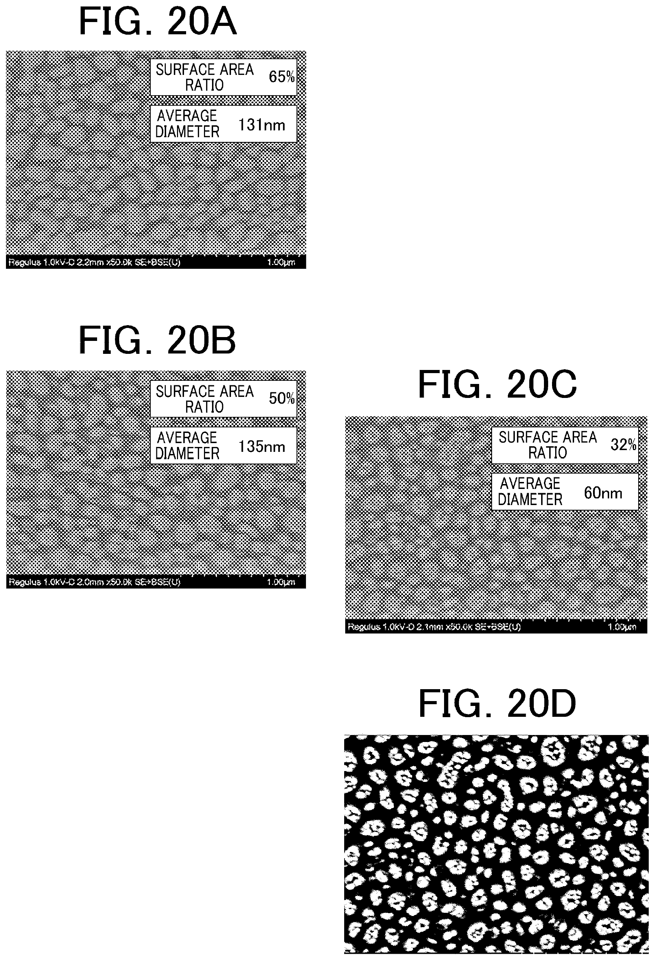

With respect to the functional film 3, a SEM photograph after the formation of the first-stage projections is illustrated in FIG. 20A, a SEM photograph after the formation of the second-stage projections is illustrated in FIG. 20B, a SEM photograph after the formation of the third-stage projections is illustrated in FIG. 20C, and the binarized data of FIG. 20C is illustrated in FIG. 20D.

< Third Film Formation of Ag Mask >

An Ag mask was formed on the second-stage projections in the same manner as in the above-described "first film formation of Ag mask" except that the film formation was performed at 300°C so that the Ag mask has a thickness of 5 nm.

< Third Etching >

After the Ag mask was formed, a film was formed under the following conditions using CE 300I (manufactured by ULVAC, Inc) as an etching apparatus. The average diameter L and the average height h of the projections were adjusted by changing the etching time.

Antenna RF: 400 W
Bias RF: 38 W
APC pressures: 0. 5 Pa
$CHF_3$ Flow rate: 20 sccm
Total etching time: 30 seconds

If the sample was heated, etching was performed in a plurality of times while cooling the sample so that the total etching time was 30 second as described above. In this manner, the third-stage projections were formed.

< Third Peeling of Ag Mask >

After the third-stage projections were formed, the Ag mask was peeled off in the same procedure as the above-described "first peeling of Ag mask". The sample was washed with pure water and cleaned with a UV ozone apparatus.

< Formation of Slip Coating >

After the Ag mask is removed, a film forming apparatus (BMC-800T, manufactured by Synchron, Inc) was used, the following film forming material was charged and EB vapor deposition was performed at a film forming rate of 1 Å/sec to form a 2 nm slip coating.

Film forming material of the slip coating: $Ta_2O_5$-$TiO_2$ (trade name: OA-600, manufactured by Canon Optron Co., Ltd).

The heating condition was 370°C.

[Production of Functional Film 4]

In the production of the functional film 1, the "film formation of the inorganic layer 1" was changed to the "film formation of the inorganic layer 2" shown below, and the total time of the first and second etching was changed as shown in Table II below. Further, after the second peeling of the Ag mask, a slip coating was formed and then a water-repellent film was formed in the same manner as in the production of the functional film 3. Except for these, a functional film 4 was produced in the same manner as in the production of the functional film 3.

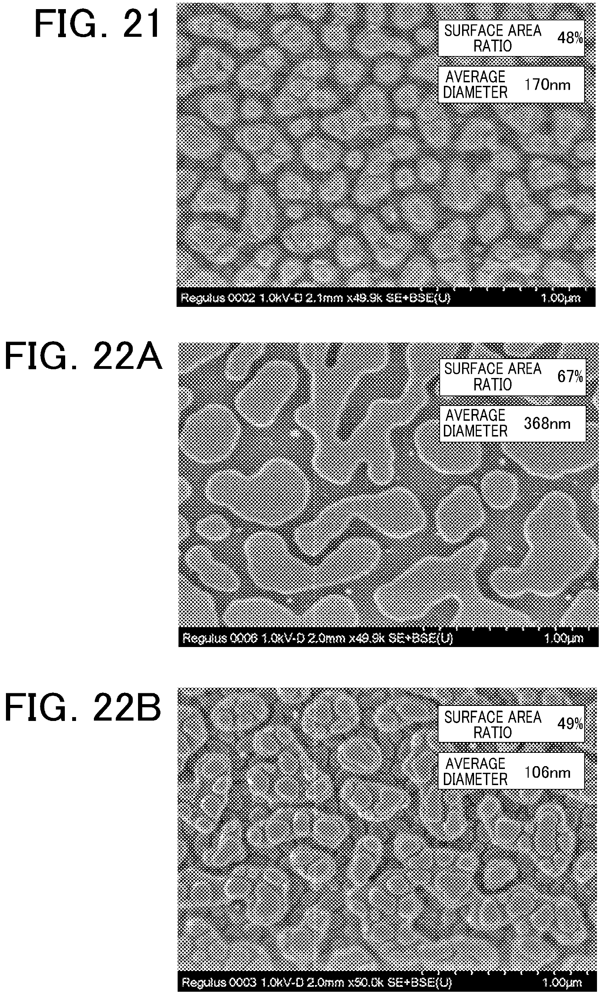

FIG. 21 illustrates a SEM photograph of the functional film 4 after the formation of the second-stage projections.

< Film Formation of Inorganic Layer 2 >

An inorganic layer 2 (SIC layer) containing SiC was formed on a Si substrate under the following conditions.

(Chamber Condition)
Upper electrode: 100°C, 0 W
Lower electrode: 100°C, 500 W
Initial vacuum degree: 15 Pa
(Film Forming Material)
Tetramethylsilane (Yamanaka Hutech Corporation) 50 sccm

By using a CVD apparatus (PE-CVD apparatus) manufactured by YOUTEC, a film was formed for 130 seconds under the above-described chamber conditions while supplying tetramethyl silane at 50 sccm, thereby forming an inorganic layer 2 (SiC layer) having a thickness of 250 nm.

[Production of Functional Film 5]

A functional film 5 was formed in the same manner as in the formation of the functional film 4, except that the total etching time was changed as shown in Table II below.

Furthermore, with regard to the functional film 5, a SEM photograph after the formation of the first-stage projections is illustrated in FIG. 22A, and a SEM photograph after the formation of the second-stage projections is illustrated in FIG. 22B.

[Production of Functional Film 6]

A functional film 6 was produced in the same manner as in the production of the functional film 4, except that the "film formation of the inorganic layer 2" was changed to the "film formation of the inorganic layer 3" shown below, and the thickness of the Ag mask and the total etching time in the first and second cycle were changed as shown in Table II below. The following etching apparatus was used.

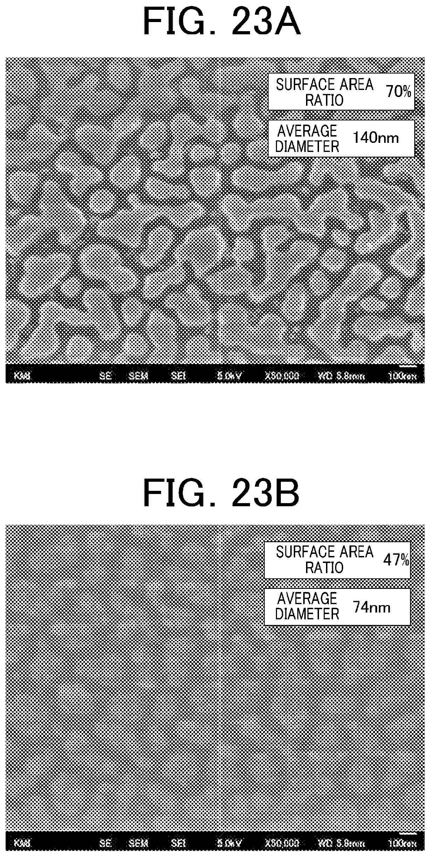

Furthermore, with regard to the functional film 6, a SEM photograph after the formation of the first-stage projections is illustrated in FIG. 23A, and a SEM photograph after the formation of the second-stage projections is illustrated in FIG. 23B.

< Film Formation of Inorganic Layer 3 >

An inorganic layer 3 (SiOC layer) containing SiOC was formed on the above-described white glass substrate under the following conditions.

(Chamber Condition)
Upper electrode: 100°C, 0 W
Lower electrode: 100°C, 500 W
Initial vacuum degree: 15 Pa
(Film Forming Material)
Tetramethylsilane (Yamanaka Hutech Corporation) 50 sccm
ADEKA SUPER TMS (ADEKA CORPORATION) 50 sccm

By using a CVD apparatus (PE-CVD apparatus) manufactured by YOUTEC, a film was formed for 130 seconds under the above-described chamber conditions while supplying tetramethyl silane and ADEKA SUPER TMS both at 50 sccm, thereby forming an inorganic layer 3 (SiOC layer) having a thickness of 250 nm.

< First Etching >

After the first deposition of the Ag mask, the film was formed under the following conditions by using a BIG Cube (manufactured by YOUTEC) as an etching apparatus.

Antenna RF: 120 W
APC pressures: 3.0 Pa
$CHF_3$ Flow rate: 20 sccm
Total etching time: 3000 seconds

If the sample was heated, etching was performed in a plurality of times while cooling the sample so that the total etching time was 3000 second as described above. In this way, the first-stage projections were formed.

< Second Etching >

After the second deposition of the Ag mask, the film was formed under the following conditions by using a BIG Cube (manufactured by YOUTEC) as an etching apparatus.

Antenna RF: 120 W
APC pressures: 3.0 Pa
$CHF_3$ Flow rate: 20 sccm
Total etching time: 1200 seconds

If the sample was heated, etching was performed in a plurality of times while cooling the sample so that the total etching time was 1200 second as described above. In this manner, the second-stage projections were formed.

[Production of Functional Film 7]

A functional film 7 was produced in the same manner as in the production of the functional film 2, except that the "film formation of the inorganic layer 1" was changed to the "film formation of the inorganic layer 4" shown below, and the total time of the first etching was changed as shown in Table II below. In the same manner as in the manufacturing of the functional film 3, after the first peeling of the Ag mask, a slip coating was formed, and then a water-repellent film was formed.

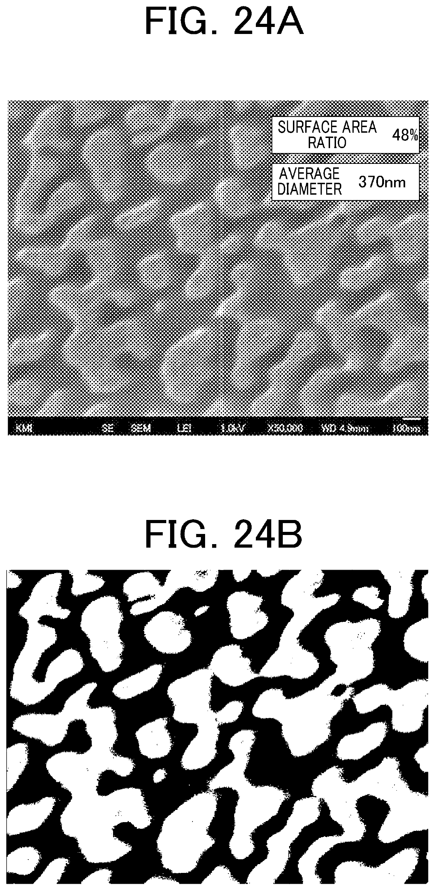

With respect to the functional film 7, a SEM photograph after the formation of the first-stage projections is illustrated in FIG. 24A, and the binarized data is illustrated in FIG. 24B.

< Film formation of Inorganic Layer 4 >

(Chamber Condition)
Upper electrode: 250°C, 0 W
Lower electrode: 250°C, 500 W
Initial vacuum degree: 15 Pa
(Film Forming Material)
hexamethyldisilazane (Kanto Chemical Corporation): 5 sccm
Adeka Super TMS (ADEKA CORPORATION): 50 sccm

By using a CVD apparatus (PE-CVD apparatus) manufactured by YOUTEC, an inorganic layer 4 (SiCN layer) was formed for 130 seconds under the above-described chamber conditions while supplying hexamethyldisilazane and ADEKA SUPER TMS respectively at 5 and 50 sccm. The film thickness was 250 nm.

[Production of Functional Film 8]

A functional film 8 was formed in the same manner as in the formation of the functional film 1, except that the thickness of the Ag mask, the film formation temperature, and the total etching time were changed as shown in Table II below. A BIG Cube (manufactured by YOUTEC Corporation), which was used in the production of the functional film 6, was used as an etching apparatus, and etching conditions other than the total etching time were the same as those in the case of the functional film 6. Furthermore, a slip coating and a water-repellent film similar to the functional film 3 were also formed.

Furthermore, with regard to the functional film 8, a SEM photograph after the formation of the first-stage projections is illustrated in FIG. 25A, and a SEM photograph after the formation of the second-stage projections is illustrated in FIG. 25B.

[Production of Functional Film 9]

A functional film 9 was formed in the same manner as in the formation of the functional film 8, except that the thickness of the Ag mask, the film formation temperature, and the total etching time were changed as shown in Table II below and that no water-repellent film was formed.

With respect to the functional film 9, a SEM photograph after the formation of the first-stage projections is shown in FIG. 26A, a SEM photograph after the formation of the second-stage projections is shown in FIG. 26B, and the binarized data of FIG. 26B is illustrated in FIG. 26C.

[Production of Functional Film 10]

A functional film 10 was produced in the same manner as in the production of the functional film 9, except that the slip coating was not formed.

Note that the SEM photograph of this functional film 10 after the formation of the first-stage projections, the SEM photograph after the formation of the second-stage projections, and the binarized data thereof are the same as those of FIGS. 26A to 26C because the difference is only the presence or absence of the slip coating and the functional film 9.

[Production of Functional Film 11] (Comparative Example 1)

In the production of the functional film 1, the inorganic layer 1 ($SiO_2$ layer) was formed on a white glass substrate, and the thickness of the Ag mask, the film formation temperature of the Ag mask, and the total etching time in the first etching were changed as shown in Table II below. Furthermore, after the first peeling of the Ag mask, a slip coating was formed, and then a water-repellent film was formed. Except for these, a functional film 11 was manufactured in the same manner as in the manufacturing of the functional film 3.

Regarding the functional film 11, a SEM photograph after formation of the first-stage projections is shown in FIG. 27A, the binarized data is shown in FIG. 27B, and the SEM photograph after abrasion is shown in FIG. 27C. As illustrated in FIG. 27C, it is recognized that the first-stage projections are broken after abrasion.

[Production of Functional Film 12] (Comparative Example 2)

In the production of the functional film 1, the inorganic layer 1 ($SiO_2$ layer) was formed on a white glass substrate, and then the same slip coating as that of the functional film 3 was formed without performing the Ag mask film formation and the etching step. A functional film 12 was thus formed.

[Table 2]

| Table II (1/2) | | | | | |
|---|---|---|---|---|---|
| Functional Film No. | Inorganic Layer | | First Ag Mask | | First Etching |
| | Material | Thickness (nm) | Ag Mask Thickness (nm) | Film Formation Temperature (°C) | Total Etching Time (second) |
| 1 | $SiO_2$ | 360 | 30 | 370 | 160 |
| 2 | $SiO_2$ | 360 | 25 | 370 | 160 |
| 3 | $SiO_2$ | 360 | 20 | 235 | 100 |
| 4 | SiC | 250 | 30 | 370 | 285 |
| 5 | SiC | 250 | 30 | 370 | 190 |
| 6 | SiOC | 250 | 25 | 370 | 3000 |
| 7 | SiCN | 250 | 25 | 370 | 190 |
| 8 | $SiO_2$ | 360 | 35 | 250 | 3000 |

(continued)

| Table II (1/2) | | | | | |
|---|---|---|---|---|---|
| Functional Film No. | Inorganic Layer | | First Ag Mask | | First Etching |
| | Material | Thickness (nm) | Ag Mask Thickness (nm) | Film Formation Temperature (°C) | Total Etching Time (second) |
| 9 | SiO₂ | 360 | 25 | 370 | 3000 |
| 10 | SiO₂ | 360 | 25 | 370 | 3000 |
| 11 | SiO₂ | 360 | 5 | 300 | 120 |
| 12 | SiO₂ | 360 | - | - | - |

Table II (2/2 Continued)

| Functional Film No. | Second Ag Mask | | Second Etching | Third Ag Mask | | Third Etching | Etching Device |
|---|---|---|---|---|---|---|---|
| | Ag Mask Thickness (nm) | Film Formation Temperature (°C) | Total Etching Time (second) | Ag Mask Thickness (nm) | Film Formation Temperature (°C) | Total Etching Time (second) | |
| 1 | 15 | 370 | 40 | - | - | - | CE-300I |
| 2 | 15 | 370 | 40 | - | - | - | CE-300I |
| 3 | 30 | 314 | 50 | 5 | 300 | 30 | CE-300I |
| 4 | 15 | 370 | 70 | - | - | - | CE-300I |
| 5 | 15 | 370 | 40 | - | - | - | CE-300I |
| 6 | 15 | 370 | 1200 | - | - | - | BIG Cube |
| 7 | - | - | - | - | - | - | CE-300I |
| 8 | 30 | 150 | 2400 | - | - | - | BIG Cube |
| 9 | 15 | 370 | 1800 | - | - | - | BIG Cube |
| 10 | 15 | 370 | 1800 | - | - | - | BIG Cube |
| 11 | - | - | - | - | - | - | CE-300I |
| 12 | - | - | - | - | - | - | - |

For the functional films obtained as described above, the total average height H, the average height h of the highest-stage projections, the average diameters of the first- to third-stage projections, and the ratio of the surface area were calculated by the following methods and are shown in the following table. Furthermore, the ratio of the major axis diameter to the minor axis diameter (major axis diameter/minor axis diameter) of the projection was also calculated.

The Mohs hardness of the inorganic substances contained in the inorganic layer is as shown in Table III below.

< Total Average Height >

The total average height H was calculated by an image analysis method using an atomic force microscope (AFM) as described above. As described above, it may also be calculated by observing a cross section of the projections with an electron microscope.

< Average Height of Highest-Stage Projections >

The average height h of the highest-stage projections was calculated by the image analysis method using an atomic force microscope (AFM) as described above. As described above, it may also be calculated by observing a cross section of the projections with an electron microscope.

< Average Diameters of First-Stage Projections to Third-Stage Projections >

For the average diameters of the first-stage projections to the third-stage projections when the fine uneven structure was viewed from the top, photographs were taken by an electron microscope as described above. Thereafter, the average diameters were calculated from the captured images using the image processing free software "Image J (Image J1 32S created by Wayne Rasband)". The average diameter of the first-stage projections was calculated before forming the second-stage projections, and the average diameter of the second-stage projections was also calculated before forming the third stage projections.

< Surface Area Ratios of First-Stage projections to Third-Stage Projections >

For the ratios of the surface areas of the first- to third-stage projections to the surface area of the entire fine uneven structure when the fine uneven structure is viewed from the top, photographs were taken by an electron microscope. Thereafter, the ratios were calculated from the captured images using the image processing free software "Image J (Image J1 32S created by Wayne Rasband)". Here, the "ratio of the surface area of the first-stage projections" is the ratio of the surface area of the first-stage projections before the second-stage projections are formed on the first-stage projections. Similarly, in a case where the third-stage projections are formed on the second-stage projections, the "ratio of the surface area of the second-stage projections" is the ratio of the surface area of the second-stage projections before forming the third-stage projections.

< Ratio of Major Axis Diameter to Minor Axis Diameter of Projections >

The major axis diameter and the minor axis diameter were calculated for arbitrary 10 or more projections of each stage such as the first stage, the second stage, and the third stage. To be specific, in the same manner as in the above-described "method of calculating the average diameter of the highest-stage projections", the fine uneven structure was observed by SEM, and the diameters (major axis diameters) of the minimum circumscribed circles C1 drawn on the projections and the diameters (minor axis diameters) of the maximum inscribed circles C2 drawn on the projections were measured. Ratios of the major axis diameter and the minor axis diameter were calculated from these measurement results, and the maximum value among these was defined as the ratio of the major axis diameter to the minor axis diameter of this functional film.

[Evaluation]

The functional films obtained above were evaluated as follows.

< Initial Water Contact Angle >

By using a contact angle measuring device G-1 manufactured by Erma Co., Ltd., $10\mu$ L of pure water was dropped on each functional film in an environment of 23°C and 50% RH, and a static contact angle 5 seconds after the dropping was measured, which was defined as an initial water contact angle. A water contact angle of 110° or more was regarded as having no practical problem.

< Water Contact Angle after Abrasion >

A Bemcot Clean Wipe P (manufactured by Asahi Kasei Corporation) was used, and the samples were abraded 2000 times under a load of 250 g/cm$^2$. An abrasion treatment was performed by hand polishing while measuring the weight by a general electronic balance. Thereafter, $10\mu$L of pure water was dropped on each functional film under an environment of 23°C and 50% RH using a contact angle measuring apparatus G-1 (manufactured by Erma Co., Ltd), and a static contact angle 5 seconds after the dropping was measured, which was defined as a water contact angle after abrasion. A difference (deterioration) of 10° or less between the initial water contact angle and the water contact angle after abrasion was regarded as having no problem in practical use.

Initial Fogging Property

Under an environment of 25°C and 50% RH, a moving image of the sample surface was taken with an optical microscope (VH-Z100R, manufactured by Keyence Corporation) using a 500 x lens, and evaluated.
To be specific, degrees of dew condensation were compared by spraying water vapor at 35°C and 90% RH onto the surfaces of the obtained functional films with a tube having a diameter of 6.35 mm. Regarding the photograph of dew condensation, comparative photograph was created by freezing the moving image after 3 seconds from the start of spraying and capturing a screen shot. The image processing was performed using the Image J software, and the ratio (%) of the area occupied by the water particles to the entire screen was calculated. The binarization was performed such that water particles (water droplets) become black.

A ratio of the area of 50% or less was considered as having no problem in practical use.

The initial fogging property and the fogging property after abrasion described below were evaluated only for the functional films 10, 11, and 13.

FIGs. 28A and 28B are diagrams when the initial fogging property of the functional film 9 was evaluated, in which the FIG. 28A is a captured image by an electronic microscope and the FIG. 28B is a binarized data.

In addition, FIGs. 29A and 29B are an electron-microscopic image and binarized data of the functional film 10. FIGs. 30A and 30B are an electron-microscopic image and binarized data of the functional film 12.

< Fogging Property after Abrasion >

A Bemcot Clean Wipe P (manufactured by Asahi Kasei Corporation) was used, and the samples were abraded 2000 times under a load of 250 g/cm$^2$. An abrasion treatment was performed by hand polishing while measuring the weight by a general electronic balance. Thereafter, in the same manner as in the evaluation method of the "initial fogging property", water vapor was sprayed. image processing was performed, and the ratio (%) of the area occupied by the water particles in the entire screen was calculated.

A ratio of the area of 60% or less was considered as having no problem in practical use.

< Initial Average Reflectance >

The average reflectance of each functional film in the wavelength range of 420 to 670 nm was measured using USPM-RU, which is a microregion spectral reflectivity measurement device manufactured by Olympus Corporation. An initial average reflectance of 1.69% or less was considered to be preferable for practical use.

< Average Reflectance after Abrasion >

A Bemcot Clean Wipe P (manufactured by Asahi Kasei Corporation) was used, and the samples were abraded 2000 times under a load of 250 g/cm$^2$.

An abrasion treatment was performed by hand polishing while measuring the weight by a general electronic balance. Thereafter, in the same manner as the evaluation method of the "initial average reflectance", the average reflectance of each functional film in a wavelength range of 420 to 670 nm was measured. An average reflectance after abrasion of 3.0% or less was considered to be practically preferable.

[Table 3]

| Table III (1/2) | | | | | | | | | | | | | |
|---|---|---|---|---|---|---|---|---|---|---|---|---|---|
| Functional Film No. | *1 | *2 | *3 | *4 | *5 | *6 | *7 | *8 | *9 | Slip Coating | Water Repellent Film | Mohs Hardness | Formula (I): X $\times$ Y |
| 1 | 225 | 85 | 416 | 155 | - | 71 | 49 | - | 5.3 | None | Fluoro Surf | 8 | 16 |
| 2 | 220 | 80 | 269 | 161 | - | 65 | 39 | - | 4.6 | None | Fluoro Surf | 8 | 16 |
| 3 | 160 | 30 | 131 | 135 | 60 | 65 | 50 | 32 | 2.0 | OA600 | Fluoro Surf | 8 | 24 |
| 4 | 140 | 60 | 205 | 170 | - | 64 | 48 | - | 2.8 | OA600 | Fluoro Surf | 13 | 26 |
| 5 | 110 | 35 | 368 | 106 | - | 67 | 49 | - | 6.2 | OA600 | Fluoro Surf | 13 | 26 |
| 6 | 210 | 60 | 140 | 74 | - | 70 | 47 | - | 5.5 | OA600 | Fluoro Surf | 10 | 20 |

(continued)

| Functional Film No. | *1 | *2 | *3 | *4 | *5 | *6 | *7 | *8 | *9 | Slip Coating | Water Repellent Film | Mohs Hardness | Formula (I): X × Y |
|---|---|---|---|---|---|---|---|---|---|---|---|---|---|
| | | | | | | | | | | | | | Table III (1/2) |
| 7 | 101 | 101 | 370 | - | - | 48 | - | - | 5.5 | OA600 | Fluoro Surf | 13 | 13 |
| 8 | 207 | 130 | Infinite | 281 | - | 64 | 54 | - | 3.1 | OA600 | Fluoro Surf | 8 | 16 |
| 9 | 256 | 96 | 277 | 130 | - | 50 | 19 | - | 3.4 | OA600 | None | 8 | 16 |
| 10 | 256 | 96 | 277 | 130 | - | 50 | 19 | - | 3.4 | None | None | 8 | 16 |
| 11 | 160 | 160 | 68 | - | - | 47 | - | - | 1.9 | OA600 | Fluoro Surf | 8 | 7 |
| 12 | - | - | - | - | - | - | - | - | - | OA600 | None | 8 | - |

*1: Average height (total average height H) from lowermost bottom of lowest-stage projections to outermost surface of highest-stage projections (nm)
*2: Average height h of highest-stage projections (nm)
*3: Average diameter of first-stage projections (nm)
*4: Average diameter of second-stage projections (nm)
*5: Average diameter of third-stage projections (nm)
*6: Surface area ratio of first-stage projections (%)
*7: Surface area ratio of second-stage projections (%)
*8: Surface area ratio of third-stage projections (%)
*9: Major axis / minor axis of projections

Table III (2/2 Continued)

| Functional Film No. | Randomness | Mesh | Contact Angle (Initial) (°) | Contact Angle (After Abrasion) (°) | Haze Property (Initial) (%) | Haze Property (After Abrasion) (%) | Average reflectance (Initial) (%) | Average reflectance (After Abrasion) (%) | Remarks |
|---|---|---|---|---|---|---|---|---|---|
| 1 | ○ | - | 136 | 130 | - | - | 0.87 | 1.02 | Inventive |
| 2 | ○ | - | 140 | 132 | - | - | 0.74 | 0.73 | Inventive |
| 3 | ○ | - | 145 | 143 | - | - | 0.29 | 0.48 | Inventive |
| 4 | ○ | - | 140 | 140 | - | - | - | - | Inventive |
| 5 | ○ | - | 118 | 118 | - | - | - | - | Inventive |
| 6 | ○ | - | 146 | 143 | - | - | - | - | Inventive |
| 7 | ○ | - | 140 | 138 | - | - | - | - | Inventive |
| 8 | ○ | ○ | 140 | 139 | - | - | 0.28 | 0.56 | Inventive |
| 9 | ○ | - | - | - | 20 | 26 | 0.54 | 0.87 | Inventive |
| 10 | ○ | - | - | - | 49 | 53 | 0.54 | 0.87 | Inventive |
| 11 | ○ | - | 140 | 85 | - | - | 1.24 | 3.74 | Comparative |
| 12 | - | - | - | - | 72 | 86 | - | - | Comparative |

As is clear from the above results, it is understood that the functional films of the present invention have a low average reflectance and excellent optical performance as compared with the functional films of Comparative Examples, and can achieve both rubbing resistance and super water repellency.

Further, when the functional film 10 is compared with the functional film 12, it is recognized that the fine uneven structure of the present invention can impart the anti-fogging effect. In particular, providing the slip coating is effective in achieving the ant fogging effect.

Industrial Applicability

The present invention is applicable to a functional film which can achieve both rubbing resistance and super water repellency and can be mass-produced, a method for producing the functional film, and an optical device, an inkjet head, and a mold which include the functional film.

Reference Signs List

1 Substrate
2 Inorganic layer
3, 4 metal mask
20A Fine uneven structure having one-stage projections
20B Fine uneven structure having two-stage projections
21 First-stage projection
22 Second-stage projection
21B Lowermost bottom of first-stage projection
22A Outermost surface of second-stage projection
22B Lowermost bottom of second-stage projection
100 Functional film
H Total average height
H Average height of Highest-stage projections
5 First reflectance adjusting layer unit
6 Second reflectance adjusting layer unit
7A, 7B Low-refractive index layer
8, 12 High-refractive index layer
11A First low-refractive index layer
11B Second low-refractive index layer
13 Photocatalyst layer
15 Salt spray protection layer

**Claims**

1. A functional film (100), containing an inorganic material as a main component and having a fine uneven structure (20B) on a surface, wherein

in a vertical cross section in a film thickness direction, a plurality of projections constituting the fine uneven structure is formed in a stepped shape having more than one stages (21, 22),
a mutual positional relationship and a shape of the plurality of projections are random and have no regularity in terms of identity or periodicity
the functional film satisfies the following Formula (I) where X is a modified Mohs hardness of the inorganic material, and an integer Y is the number of stages of the projections,
the modified Mohs hardness is defined according to the modified Mohs hardness values and respective standard minerals as defined in Table CI and
an average height from an lowermost bottom of lowest-stage projections of the plurality of projections to an outermost surface of highest-stage projections of the plurality of projections is 1 $\mu$m or less.

$$\text{Formula (I): } 10 \leq X \times Y$$

Table CI:

| Modified Mohs Hardness | Standard Mineral Name |
|---|---|
| 8 | Quartz, Crystal |
| 9 | Topaz |
| 10 | Garnet |
| 11 | Fused Zirconia Tantalum Carbide |
| 12 | Corundum Tungsten Carbide |
| 13 | Silicon Carbide |
| 14 | Boron Carbide |
| 15 | Diamond |

2. The functional film according to claim 1, wherein

in a plan view of the fine uneven structure, an average diameter of the highest-stage projections is within a range of 10 to 500 nm,
a ratio of a surface area of the highest-stage projections to an entire surface area of the fine uneven structure is in a range of 30 to 70%, and
in the vertical cross section of the fine uneven structure, an average height from a bottom of the highest-stage projections to an outermost surface of the highest-stage projections is in a range of 10 to 250 nm.

3. The functional film according to claim 1 or 2, wherein in a plan view of the fine uneven structure, at least a part of the plurality of projections has a ratio of a major axis diameter to a minor axis diameter (major axis diameter/minor axis diameter) of 2 or more.

4. The functional film according to claim 1, wherein in a plan view of the fine uneven structure, at least a part of the plurality of projections has a mesh shape.

5. The functional film according to any one of claims 1 to 4, wherein the inorganic material includes a substance having a Mohs hardness of 9 or more.

6. The functional film according to any one of claims 1 to 5, wherein

a main component of the inorganic material is silicon dioxide, and
the integer Y is 2.

7. The functional film according to any one of claims 1 to 6, further comprising a slip coating on the plurality of projections.

8. The functional film according to any one of claims 1 to 7, further comprising a film containing a water-repellent material on the plurality of projections.

9. The functional film according to any one of claims 1 to 8, wherein

a contact angle with water at 25°C is 130 degrees or more, and
a decrease of the contact angle due to abrasion is 10 degrees or less.

10. A method for producing the functional film according to any one of claims 1 to 9, the method comprising;
forming the fine uneven structure through steps of forming a film of a metal mask on an inorganic layer and processing the inorganic layer by dry etching.

11. The method for producing the functional film according to claim 10, comprising at least two or more cycles of the steps of forming a film of the metal mask and processing the film by dry etching.

12. An optical device comprising the functional film according to any one of claims 1 to 11.

**EP 4 300 141 B1**

13. An inkjet head comprising the functional film according to any one of claims 1 to 12.

14. A mold comprising the functional film according to any one of claims 1 to 13.

**Patentansprüche**

1. Funktionsfilm (100), der ein anorganisches Material als Hauptkomponente enthält und eine feine unebene Struktur (20B) auf einer Oberfläche aufweist, wobei

   in einem senkrechten Querschnitt in einer Filmdickenrichtung eine Vielzahl von Vorsprüngen, die die feine unebene Struktur bilden, in einer stufenförmigen Form gebildet ist, die mehr als eine Stufe (21, 22) aufweist, eine gegenseitige Positionsbeziehung und eine Form der Vielzahl von Vorsprüngen zufällig sind und in Bezug auf Identität oder Periodizität keine Regelmäßigkeit aufweisen
   der Funktionsfilm die folgende Formel (I) erfüllt, wobei X eine modifizierte Mohs-Härte des anorganischen Materials ist und eine ganze Zahl Y die Anzahl der Stufen der Vorsprünge ist,
   die modifizierte Mohs-Härte gemäß den Werten der modifizierten Mohs-Härte und jeweiligen Standardmineralien, wie in Tabelle CI definiert, definiert ist, und
   eine durchschnittliche Höhe von einer untersten Unterseite der Vorsprünge der untersten Stufe der Vielzahl von Vorsprüngen zu einer äußersten Oberfläche der Vorsprünge der obersten Stufe der Vielzahl von Vorsprüngen 1 $\mu$m oder weniger beträgt,

$$\text{Formel (I): } 10 \leq X \times Y$$

Tabelle CI:

| Modifizierte Mohs-Härte | Name des Standardminerals |
| --- | --- |
| 8 | Quarz, Kristall |
| 9 | Topas |
| 10 | Granat |
| 11 | Kondensiertes Zirkonoxid-Tantalcarbid |
| 12 | Korund-Wolframcarbid |
| 13 | Siliziumcarbid |
| 14 | Borcarbid |
| 15 | Diamant |

2. Funktionsfilm nach Anspruch 1, wobei

   in einer Draufsicht der feinen unebenen Struktur ein durchschnittlicher Durchmesser der Vorsprünge der obersten Stufe in einem Bereich von 10 bis 500 nm liegt;
   ein Verhältnis einer Fläche der Oberfläche der Vorsprünge der obersten Stufe zu einer Fläche der Gesamtfläche der feinen unebenen Struktur in einem Bereich von 30 bis 70 % liegt, und
   im senkrechten Querschnitt der feinen unebenen Struktur eine durchschnittliche Höhe von einer Unterseite der Vorsprünge der obersten Stufe zu einer äußersten Oberfläche der Vorsprünge der obersten Stufe in einem Bereich von 10 bis 250 nm liegt.

3. Funktionsfilm nach Anspruch 1 oder 2, wobei in einer Draufsicht der feinen unebenen Struktur zumindest ein Teil der Vielzahl von Vorsprüngen ein Verhältnis eines Hauptachsendurchmessers zu einem Nebenachsendurchmesser (Hauptachsendurchmesser/Nebenachsendurchmesser) von 2 oder mehr aufweist.

4. Funktionsfilm nach Anspruch 1, wobei in einer Draufsicht der feinen unebenen Struktur zumindest ein Teil der Vielzahl von Vorsprüngen eine Gitterform aufweist.

32

5. Funktionsfilm nach einem der Ansprüche 1 bis 4, wobei das anorganische Material eine Substanz einschließt, die eine Mohs-Härte von 9 oder mehr aufweist.

6. Funktionsfilm nach einem der Ansprüche 1 bis 5, wobei

   eine Hauptkomponente des anorganischen Materials Siliziumdioxid ist, und
   die ganze Zahl Y 2 ist.

7. Funktionsfilm nach einem der Ansprüche 1 bis 6, weiter umfassend eine Gleitbeschichtung auf der Vielzahl von Vorsprüngen.

8. Funktionsfilm nach einem der Ansprüche 1 bis 7, weiter umfassend einen Film, der ein wasserabweisendes Material enthält, auf der Vielzahl von Vorsprüngen.

9. Funktionsfilm nach einem der Ansprüche 1 bis 8, wobei

   ein Kontaktwinkel mit Wasser bei 25 °C 130 Grad oder mehr beträgt; und
   eine Verringerung des Kontaktwinkels aufgrund von Abnutzung von 10 Grad oder weniger beträgt.

10. Verfahren zum Herstellen des Funktionsfilms nach einem der Ansprüche 1 bis 9, wobei das Verfahren umfasst:
   Bilden der feinen unebenen Struktur durch die Schritte des Bildens eines Films aus einer Metallmaske auf einer anorganischen Schicht und des Verarbeitens der anorganischen Schicht durch Trockenätzen.

11. Verfahren zum Herstellen des Funktionsfilms nach Anspruch 10, umfassend mindestens zwei oder mehr Zyklen der Schritte des Bildens eines Films aus der Metallmaske und des Verarbeitens des Films durch Trockenätzen.

12. Optische Vorrichtung, umfassend den Funktionsfilm nach einem der Ansprüche 1 bis 11.

13. Tintenstrahlkopf, umfassend den Funktionsfilm nach einem der Ansprüche 1 bis 12.

14. Gussform, umfassend den Funktionsfilm nach einem der Ansprüche 1 bis 13.


**Revendications**

1. Film fonctionnel (100), contenant un matériau inorganique comme composant principal et présentant une structure fine irrégulière (20B) sur une surface, dans lequel

   dans une section transversale verticale dans une direction d'épaisseur de film, une pluralité de saillies constituant la structure fine irrégulière est formée en une forme étagée présentant plus d'un étage (21, 22),
   une relation de position mutuelle et une forme de la pluralité de projections sont aléatoires et ne présentent aucune régularité en termes d'identité ou de périodicité
   le film fonctionnel satisfait à la formule (I) suivante où X est une dureté de Mohs modifiée du matériau inorganique, et un nombre entier Y est le nombre d'étages des projections,
   la dureté de Mohs modifiée est définie en fonction des valeurs de dureté de Mohs modifiées et des minéraux étalons respectifs tels que définis dans le Tableau CI et
   une hauteur moyenne d'un fond le plus bas de projections d'étage le plus bas de la pluralité de projections à une surface la plus extérieure de projections d'étage le plus haut de la pluralité de projections est de 1 $\mu$m ou moins.

$$\text{Formule (I) : } 10 \leq X \times Y$$


Tableau CI :

| Dureté de Mohs modifiée | Nom du minéral standard |
|---|---|
| 8 | Quartz, cristal |
| 9 | Topaze |

(continued)

| Dureté de Mohs modifiée | Nom du minéral standard |
|---|---|
| 10 | Grenat |
| 11 | Zircone fondue Carbure de tantale |
| 12 | Corindon Carbure de tungstène |
| 13 | Carbure de silicium |
| 14 | Carbure de bore |
| 15 | Diamant |

2. Film fonctionnel selon la revendication 1, dans lequel

dans une vue en plan de la structure fine irrégulière, un diamètre moyen des projections d'étage le plus haut est compris dans une plage de 10 à 500 nm,
un rapport d'une superficie des projections d'étage le plus haut sur une superficie entière de la structure fine irrégulière est dans une plage de 30 à 70 %, et
dans la section transversale verticale de la structure fine irrégulière, une hauteur moyenne d'un fond des projections d'étage les plus hauts à une surface la plus extérieure des projections d'étage les plus hauts est dans une plage de 10 à 250 nm.

3. Film fonctionnel selon la revendication 1 ou la revendication 2, dans lequel, dans une vue en plan de la structure fine irrégulière, au moins une partie de la pluralité de projections présente un rapport d'un diamètre d'axe majeur à un diamètre d'axe mineur (diamètre d'axe majeur/diamètre d'axe mineur) de 2 ou plus.

4. Film fonctionnel selon la revendication 1, dans lequel, dans une vue en plan de la structure fine irrégulière, au moins une partie de la pluralité de projections présente une forme de maillage.

5. Film fonctionnel selon l'une quelconque des revendications 1 à 4, dans lequel le matériau inorganique inclut une substance présentant une dureté de Mohs de 9 ou plus.

6. Film fonctionnel selon l'une quelconque des revendications 1 à 5, dans lequel

un composant principal du matériau inorganique est le dioxyde de silicium, et
le nombre entier Y est 2.

7. Film fonctionnel selon l'une quelconque des revendications 1 à 6, comprenant en outre un revêtement de glissement sur la pluralité de saillies.

8. Film fonctionnel selon l'une quelconque des revendications 1 à 7, comprenant en outre un film contenant un matériau hydrofuge sur la pluralité de projections.

9. Film fonctionnel selon l'une quelconque des revendications 1 à 8, dans lequel

un angle de contact avec l'eau à 25 °C est de 130 degrés ou plus, et
une diminution de l'angle de contact due à l'abrasion est de 10 degrés ou moins.

10. Procédé de production du film fonctionnel selon l'une quelconque des revendications 1 à 9, le procédé comprenant ; la formation de la structure fine irrégulière par des étapes de formage d'un film d'un masque métallique sur une couche inorganique et de traitement de la couche inorganique par gravure à sec.

11. Procédé de production du film fonctionnel selon la revendication 10, comprenant au moins deux cycles ou plus des étapes de formage d'un film du masque métallique et de traitement du film par gravure à sec.

12. Dispositif optique comprenant le film fonctionnel selon l'une quelconque des revendications 1 à 11.

**13.** Tête à jet d'encre comprenant le film fonctionnel selon l'une quelconque des revendications 1 à 12.

**14.** Moule comprenant le film fonctionnel selon l'une quelconque des revendications 1 à 13.

# FIG. 1

# FIG. 2

# FIG. 3

# FIG. 4

# FIG. 5

# FIG. 6

# FIG. 7

# FIG. 8A

# FIG. 8B

FIG. 9A

FIG. 9B

FIG. 9C

# FIG. 10A

P2

# FIG. 10B

# FIG. 10C

# FIG. 11A

| File | Edit | Image | Process | Analyze | Plugins | Window | Help | | | | | | × |

Type ▶ ✔ 8-bit ≫
x=836, y=94 Adjust 16-bit
⋮ ⋮

# FIG. 11B

| File | Edit | Image | Process | Analyze | Plugins | Window | Help | | | | | | × |

Type Brightness/Contrast ≫
Window/Level...
x=836, y=94 Adjust ▶ Color Balance...
⋮ Threshold...
⋮

# FIG. 11C

# FIG. 12A

# FIG. 12B

Histogram of seikoAFM

300x240 pixels; RGB; 281K

0                                                                                                                255

Count: 262656          Min: 0
Mean: 105.161          Max: 255
StdDev: 125.528        Mode: 0(154338)

| List | Copy | Log | Live |

# FIG. 13A

# FIG. 13E

# FIG. 13B

# FIG. 13F

# FIG. 13C

# FIG. 13D

# FIG. 13G

# FIG. 14

# FIG. 15

# FIG. 16

# FIG. 17

FIG. 18A

FIG. 18B

FIG. 18C

FIG. 19A

| SURFACE AREA RATIO | 65% |
| AVERAGE DIAMETER | 269nm |

Regulus 0001 1.0kV-D 1.8mm x50.0k SE+BSE(U)     1.00μm

FIG. 19B

| SURFACE AREA RATIO | 39% |
| AVERAGE DIAMETER | 161nm |

Regulus 0001 1.0kV-D 2.1mm x50.0k SE+BSE(U)     1.00μm

FIG. 19C

# FIG. 20A

| SURFACE AREA RATIO | 65% |
| AVERAGE DIAMETER | 131nm |

Regulus 1.0kV-D 2.2mm x50.0k SE+BSE(U)    1.00μm

# FIG. 20B

| SURFACE AREA RATIO | 50% |
| AVERAGE DIAMETER | 135nm |

Regulus 1.0kV-D 2.0mm x50.0k SE+BSE(U)    1.00μm

# FIG. 20C

| SURFACE AREA RATIO | 32% |
| AVERAGE DIAMETER | 60nm |

Regulus 1.0kV-D 2.1mm x50.0k SE+BSE(U)    1.00μm

# FIG. 20D

FIG. 21

| SURFACE AREA RATIO | 48% |
| AVERAGE DIAMETER | 170nm |

Regulus 0002 1.0kV-D 2.1mm x49.9k SE+BSE(U)    1.00μm

FIG. 22A

| SURFACE AREA RATIO | 67% |
| AVERAGE DIAMETER | 368nm |

Regulus 0006 1.0kV-D 2.0mm x49.9k SE+BSE(U)    1.00μm

FIG. 22B

| SURFACE AREA RATIO | 49% |
| AVERAGE DIAMETER | 106nm |

Regulus 0003 1.0kV-D 2.0mm x50.0k SE+BSE(U)    1.00μm

# FIG. 23A

SURFACE AREA RATIO 70%

AVERAGE DIAMETER 140nm

# FIG. 23B

SURFACE AREA RATIO 47%

AVERAGE DIAMETER 74nm

# FIG. 24A

# FIG. 24B

# FIG. 25A

| SURFACE AREA RATIO | 64% |
| AVERAGE DIAMETER INDEFINABLE | |

# FIG. 25B

| SURFACE AREA RATIO | 54% |
| AVERAGE DIAMETER | 281nm |

FIG. 26A

| SURFACE AREA RATIO | 50% |
| AVERAGE DIAMETER | 277nm |
| MAJOR AXIS /MINOR AXIS | 3.4 |

FIG. 26B

| SURFACE AREA RATIO | 19% |
| AVERAGE DIAMETER | 130nm |
| MAJOR AXIS /MINOR AXIS | 1.5 |

FIG. 26C

FIG. 27A

| SURFACE AREA RATIO | 47% |
| AVERAGE DIAMETER | 68nm |
| MAJOR AXIS /MINOR AXIS | 1.9 |

Regulus 1.0kV-D 2.0mm x50.0k SE+BSE(U)          1.00μm

FIG. 27B

FIG. 27C

Regulus 1.0kV-D 2.0mm x50.0k SE+BSE(U)          1.00μm

# FIG. 28A

# FIG. 28B

| RATIO OF WATER PARTICLES | 20% |

# FIG. 29A

100.00 μm

# FIG. 29B

RATIO OF WATER PARTICLES 49%

# FIG. 30A

100.00 μ m

# FIG. 30B

RATIO OF WATER PARTICLES 72%

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5716679 B
- JP 2020038311 A
- US 2010038342 A1
- US 2011028305 A1
- JP 2005089771 A